# EUROPEAN PATENT SPECIFICATION

(11) **EP 3 622 364 B1**
(45) Date of publication and mention of the grant of the patent: **05.07.2023**
(21) Application number: 18728286.8
(22) Date of filing: 09.05.2018
(51) Int. Cl.: G05D 1/00, G05D 1/02, G01S 7/00, G01S 13/931, G05B 23/00, G07C 5/00, G01S 17/86, G01S 17/87, B60T 7/00, B60T 7/22, G01S 17/931

(54) **SYSTEM AND METHOD FOR MOTION CONTROL OF A ROBOT**
SYSTEM UND VERFAHREN ZUR BEWEGUNGSSTEUERUNG VON EINEM ROBOTER
SYSTÈME ET PROCÉDÉ DE COMMANDE DU DÉPLACEMENT D'UN ROBOT

(30) Priority: 09.05.2017 US 201762503762 P
(43) Date of publication of application: 18.03.2020
(73) Proprietor: Brain Corporation, San Diego, CA 92121 (US)
(72) Inventor: SZATMARY, Botond, San Diego California 92121 (US); RICHERT, Micah, San Diego California 92130 (US); PASSOT, Jean-Baptiste, Solana Beach California 92075 (US); BLACK, John, San Diego California 92121 (US); MARTIN, Oliver, San Diego California 92107 (US)
(74) Representative: Reed Smith LLP
(86) International application number: PCT/US2018/031895
(87) International publication number: WO 2018/208984

(56) References cited:
- EP-A1- 2 595 025
- EP-A1- 3 059 650
- EP-A2- 3 082 006
- WO-A1-2011/141629
- WO-A2-2010/065864
- KR-A- 20150 105 930
- US-A1- 2012 253 582

## Description

### Priority

This application claims the benefit of priority to co-owned and co-pending U.S. Provisional Application Serial No. 62/503,762 filed May 9, 2017 of the same title.

### Copyright

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever.

### Background

### Technological Field

The present application relates generally to robotics, and more specifically to systems and methods for control system safety of robots.

### Background

Robots can be programmed to perform tasks autonomously. Some contemporary robots can follow a set of instructions in performing a robotic task.

A challenge with robot design, manufacturing, and operation is robot safety. Robots can create hazards for persons and/or objects in proximity of the robot if appropriate safeguards are not put in place. For example, a robotic vehicle has the potential to collide with a person, causing injury and/or death. Industrial robots can have moving parts, including gears, blades, arms, etc., that can also cause injury and/or death.

Contemporary robots can control the risks associated with these hazards by putting in place safety-certified components and/or certain performance-level safety integrity evaluations for equipment. However, these approaches can be costly to implement and/or may be a mismatch to the functionality/capabilities of the robots.
Accordingly, there is a need in the art for improved systems and methods for control system safety of robots.

EP3059650A1 discloses a movable object controller that includes a speed controller and a region changer. The speed controller is configured to control a speed of a movable object based on whether an obstacle is in a monitor region. The region changer is configured to change a size of the monitor region based on the speed of the movable object.

US2012/253582A1 is directed towards driving a robot or other mobile device safely through an environment by using a depth camera to obtain depth data, and then using the depth data for collision avoidance. Horizontal profile information may be built from the depth data, such as by collapsing a two-dimensional depth map into one-dimensional horizontal profile information. The horizontal profile information may be further processed by fusing the depth camera-detected obstacle data with any closer obstacle data as detected via infrared-based sensing and/or sonar-based sensing. Driving suggestions from a user or program are overridden as needed to avoid collisions, including by driving the robot towards an open space represented in the horizontal profile information, or stopping/slowing the robot as needed

EP3082006A2 discloses a cleaning robot in which light emitting portions emitting infrared rays are installed to face forward, sideward, and upward and infrared rays which are reflected by obstacles and return are received by one light receiving module to sense obstacles to prevent an increase in manufacturing cost caused by installing a plurality of light receiving portions and simultaneously to sense obstacles located above and a method of controlling the cleaning robot. The cleaning robot includes a body and a driving portion which moves the body includes at least one light emitting portion which emits light to an obstacle, a light receiving module which obtains an image signal of the obstacle by receiving the light reflected by the obstacle, and a control portion which generates obstacle sensing information based on a position of the image signal obtained by the light receiving module and controls the driving portion based on the generated obstacle sensing information. Here, the light emitting portion is installed to emit light forward, sideward, and upward from the body and to allow the light reflected by the obstacle to be received by the light receiving module, thereby sensing obstacles located forward, sideward, and above from the body

KR20150105930A discloses a forklift automated guide vehicle capable of reducing a forklift's unique risk of contacting an object, a control method thereof, and a control device thereof. The forklift automated guide vehicle includes: a plurality of first object detecting devices arranged around a vehicle body and detecting surroundings around the vehicle body; a detected-area memory unit recording, in advance, an object-detected area around the vehicle body which is set depending on a driving situation including a driving speed, a steering direction, and a transfer movement of the vehicle body; and an object detecting safety control unit transmitting information on the selected object-detected area to the first object detecting devices by selecting the object-detected area according to an actual driving situation of the vehicle body (1B) and performing the control of stopping driving of the vehicle body when the object is detected in the selected object-detected area.

WO2011/141629A1 relates to a method for a safety system of a mining vehicle. The method comprises scanning the surroundings of the mining vehicle while the mining vehicle is driven and giving a collision warning if an obstacle is detected in a safety zone of the mining vehicle. In the system, there is stored obstacle information comprising at least location information of predetermined obstacles. Location information of the obstacle detected on the basis of the scanning is compared with the location information determined in the obstacle information. Stopping of the mining vehicle, caused by the safety system due to the detected obstacle, is prevented in response to the detected obstacle being determined safe on the basis of checking the obstacle information

EP2595025 describes an autonomous mobile body capable of moving in a pull-off direction that is set by the autonomous mobile body itself so that a movable obstacle can pass through safely, without setting a halt region in advance.

WO2010/065864 discloses a supplemental control system for a materials handling vehicle that comprises one or more sensors capable of defining multiple contactless detection zones at least towards the front of the forward travel direction of a remotely controlled vehicle. The vehicle responds to the detection of objects within the designated zones based upon predetermined actions, such as to slow down or stop the vehicle, and/or to take other action, such as to perform a steer angle correction.

### Summary

The foregoing needs are satisfied by the present disclosure, which provides for, *inter alia,* systems and methods for implementing control system safety for the purposes of, for example, robotic path planning. In some implementations, a robot can globally reroute, which can allow the robot to move to other navigable areas in order to navigate around an area through which it cannot navigate and/or where navigation would be undesirable.

Example implementations described herein have innovative features, no single one of which is indispensable or solely responsible for their desirable attributes. The invention is defined by the appended claims. Some of the advantageous features will now be summarized.

In a first aspect, a method for implementing a control system in a robot is disclosed. In one exemplary implementation, the method includes: assessing risks associated with the robot; determining scenarios for mitigating the risks; defining safety functionalities; and implementing diagnostic tools on control systems of the robot.

In a second aspect, a method for safety control of a robot is disclosed. In one embodiment, the method includes: diagnosing a control system of the robot using a predetermined diagnostic criterion; if the diagnoses determines that the predetermined diagnostic criterion has not been met, performing a predetermined stop of the robot.

In one variant, the predetermined stop includes a complete shutdown of the robot. In another variant, the predetermined stop includes a controlled stop with modified power left available to actuators of the robot. In yet another variant, the predetermined stop includes a controlled stop with power available to the actuators of robot. In yet another variant, the control system is indicative of at least one of steering, speed, sensor, and data integrity.

In a third aspect, a robot is disclosed. In one exemplary implementation, the robot includes: one or more sensors configured to generate data indicative of an environment of the robot; one or more actuators configured to perform a robotic task; and a controller configured to: perform a diagnostic on the one or more sensors; and cause the one or more actuators to stop based on the diagnostic.

In one variant, the diagnostic comprises determining integrity of the data generated by the one or more sensors.

In a fourth aspect, a method for manufacturing is disclosed. In one exemplary implementation, the method includes: obtaining a machine comprising a machine processor and actuator; attaching to the machine a module comprising a module processor and one or more sensors; interfacing the module processor to the machine processor; and configuring the module processor to perform a diagnostic on the one or more sensors, wherein failure of the diagnostic cause the module processor to send a stop command to the machine processor.

In a fifth aspect, a non-transitory computer-readable storage apparatus is disclosed. In one exemplary implementation, the non-transitory computer-readable storage apparatus has a plurality of instructions stored thereon, the instructions being executable by a processing apparatus to operate a robot. The instructions configured to, when executed by the processing apparatus, cause the processing apparatus to: diagnose a control system of the robot using a predetermined diagnostic criterion; if the diagnoses determine that the predetermined diagnostic criterion has not been met, perform a predetermined stop of the robot.

These and other objects, features, and characteristics of the present disclosure, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosure. As used in the specification and in the claims, the singular form of "a", "an", and "the" include plural referents unless the context clearly dictates otherwise.

### Brief Description of the Drawings

The disclosed aspects will hereinafter be described in conjunction with the appended drawings, provided to illustrate and not to limit the disclosed aspects, wherein like designations denote like elements.
FIG. 1A is a process flow diagram of an exemplary method for implementing a control system in accordance with some implementations of this disclosure.
FIG. 1B is an overhead view diagram showing the characteristics of various zones around a robot in accordance with some implementations of this disclosure.
FIG. 2A is a functional block diagram of a robot in accordance with some principles of this disclosure.
FIG. 2B is a functional block diagram of an implementation of at least a portion of the robot as illustrated in FIG. 2A, where the robot is a mobile platform with an attached robotic module in accordance with some implementations of this disclosure.
FIG. 2C is a representation of an embodiment of the robot comprising a floor cleaner equipped with a control module described herein.
FIG. 2D is a representation of the sensing range exhibited by an embodiment of the robot comprising two LiDAR sensors in accordance with some implementations of this disclosure.
FIG. 2E and 2F show representations of a triangulation sensing embodiment of the robot in accordance with some implementations of this disclosure.
FIG. 2G is a functional block diagram of an implementation of at least a portion of the robot as illustrated in FIG. 2A in accordance with some implementations of this disclosure.
FIG. 2H is a functional block diagram of an implementation of Subsystem C architecture in accordance with some implementations of this disclosure.
FIG. 2I is a functional block diagram of an implementation of Subsystem D architecture in accordance with some implementations of this disclosure.
FIG. 3 is a functional block diagram of a system, which includes a robot communicatively and/or operatively coupled to a network in accordance with some implementations of this disclosure.

All Figures disclosed herein are ^{©} Copyright 2017 - 2018 Brain Corporation. All rights reserved.

### Detailed Description

Various aspects of the novel systems, apparatuses, and methods disclosed herein are described more fully hereinafter with reference to the accompanying drawings. This disclosure can, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art would appreciate that the scope of the disclosure is intended to cover any aspect of the novel systems, apparatuses, and methods disclosed herein, whether implemented independently of, or combined with, any other aspect of the disclosure. For example, an apparatus can be implemented or a method can be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect disclosed herein can be implemented by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, and/or objectives. The detailed description and drawings are merely illustrative of the disclosure rather than limiting, the scope of the disclosure being defined by the appended claims and equivalents thereof.

In some cases, some implementations of the present disclosure relate to robots, such as robotic mobile platforms. As used herein, a robot can include mechanical and/or virtual entities configured to carry out a series of actions automatically. In some cases, robots can be machines that are guided and/or instructed by computer programs and/or electronic circuitry. In some cases, robots can include electro-mechanical components that are configured for navigation, where the robot can move from one location to another. Such robots can include autonomous and/or semi-autonomous cars, floor cleaners, rovers, drones, planes, boats, carts, trams, wheelchairs, industrial equipment, stocking machines, mobile platforms, personal transportation devices (e.g., hover boards, SEGWAYS^{®}, wheelchairs, etc.), stocking machines, trailer movers, vehicles, and the like. Robots can also include any autonomous and/or semi-autonomous machine for transporting items, people, animals, cargo, freight, objects, luggage, and/or anything desirable from one location to another. In some cases, such robots used for transportation can include robotic mobile platforms as the robots are mobile systems that can navigate and/or move autonomously and/or semi-autonomously. These robotic mobile platforms can include autonomous and/or semi-autonomous wheelchairs, bikes, row boats, scooters, forklifts, trams, trains, carts, vehicles, tugs, and/or any machine used for transportation.

As referred to herein, floor cleaners can include floor cleaners that are manually controlled (e.g., driven or ridden, self-propelled, walk-behind or remote controlled) and/or autonomous (e.g., using little to no user control). For example, floor cleaners can include floor scrubbers that a janitor, custodian, or other person operates and/or robotic floor scrubbers that autonomously navigate and/or clean an environment. Similarly, floor cleaners can also include vacuums, steamers, buffers, mops, polishers, sweepers, burnishers, etc. The system described herein can be used to control a floor cleaner that is either operated autonomously or by a person so that the system can detect when a person or object is in its path and initiate one or more procedures to avoid hitting the person or object.

In some cases, robots can also include machines that have one or more degrees-of-freedom for movement. These machines may not traverse an environment (e.g., the machines can be fixed to a location), however, the machines can have mobile parts that are actuated. Some examples include robotic arms, machine tools, and/or other robotic machines.

Certain examples are described herein with reference to floor cleaners or mobile platforms, or robotic floor cleaners or robotic mobile platforms. Such examples are used for illustration only, and the principles described herein may be readily applied to robots generally.

In some cases, robots can include appliances, machines, and/or equipment automated to perform one or more tasks. For example, a module can be attached to the appliances, machines, and/or equipment to allow them to operate autonomously. Such attaching can be done by an end user and/or as part of the manufacturing process. In some implementations, the module can include a motor that drives the autonomous motions of the appliances, machines, and/or equipment. In some cases, the module causes the appliances, machines, and/or equipment to operate based at least in part on spoofing, such as by sending control signals to pre-existing controllers, actuators, units, and/or components of the appliances, machines, and/or equipment. The module can include sensors and/or processors to receive and generate data. The module can also include processors, actuators, and/or any of the components described herein to process the sensor data, send control signals, and/or otherwise control pre-existing controllers, units, and/or components of the appliances, machines, and/or equipment. Such appliances, machines, and/or equipment can include cars, floor cleaners, rovers, drones, planes, boats, carts, trams, wheelchairs, industrial equipment, stocking machines, mobile platforms, personal transportation devices, stocking machines, trailer movers, vehicles, and/or any type of machine.

Detailed descriptions of the various implementations and variants of the system and methods of the disclosure are now provided. While many examples discussed herein may refer to robotic floor cleaners, it will be appreciated that the described systems and methods contained herein are applicable to any kind of robot. Myriad other example implementations or uses for the technology described herein would be readily envisaged by those having ordinary skill in the art, given the contents of the present disclosure.

Advantageously, the systems and methods of this disclosure at least: (i) allow robots to operate in complex environments; (ii) provide enhanced safety for robots; (iii) allow for cost-effective construction of robots; (iv) provide for computationally efficient management of robot resources; and (v) allow construction of robots from off-the-shelf parts. Other advantages are readily discernable by one having ordinary skill in the art given the contents of the present disclosure.

For example, in some implementations, a robot can be a direct cause of an incident. In such cases, the robot can directly cause an incident, such as by directly hitting a person or an object. By contrast to being a direct cause, in the indirect case, a robot can trigger an event and/or series of events that could lead to a potential hazard (e.g., leaving water or other elements on the floor). Advantageously, systems and methods of this disclosure can prevent a robot from being a direct cause of an incident.

In some cases, systems and methods of this disclosure allow certain functionality of robots to be monitored and/or diagnosed. In the event of potential complications and/or shortcomings of such functionality, the diagnostics can lead to appropriate actions to support robot safety, such as a stopping of the robot.

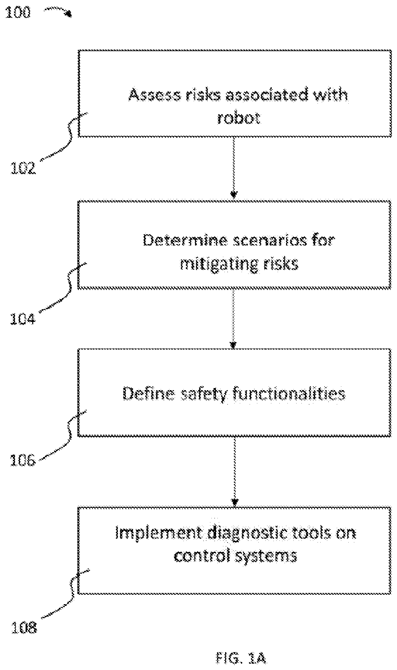

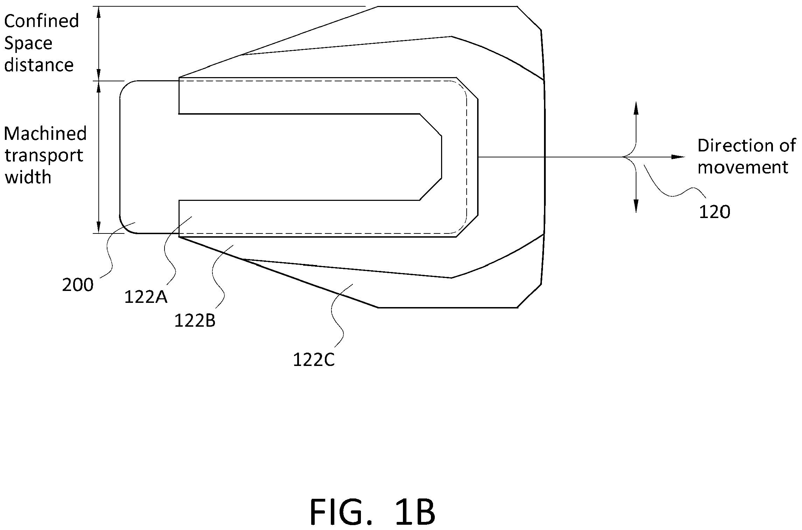

FIG. 1A is a process flow diagram of an exemplary method 100 for implementing a control system in accordance with some implementations of this disclosure. Block 102 includes assessing risks associated with a robot. For example, risks can include collisions of a robotic mobile platform with people, children, items, and/or other things. In this regard, risks can vary based at least in part on relative locations. By way of illustration, FIG. 1B is an overhead view diagram showing the characteristics of various zones around robot 200 in accordance with some implementations of this disclosure. As illustrated, the shape associated with robot 200 approximates a rounded rectangular shape. Other shapes are contemplated, such as any shape of a robot. The shape has an associated length, width, height etc. For example but not limitation, a typical riding commercial cleaning machine may comprise dimensions of about 1.3 to 1.5 m (length) x about 0.8 to 1 m (width) x about 1.2 to 1.5 m (height), an operational weight of about 400 to 600 kg; a maximum speed of 1-2 meters/second; and a stopping distance of about 0.8-4 meters. Walk-behind self-propelled floor cleaners are generally smaller and may travel at about 0.8 to 2 meters/second. In some cases, the drawn shape can be an approximate footprint, not precisely aligning with the actual size and/or shape of robot 200. Robot 200 can have a direction of motion, such as in the case of a robotic mobile platform. For example, indicator 120 can show that robot 200 can move in a plurality of directions, such as forward, backward and/or turning. Any direction of motion of a robot is also contemplated, such as forward, backward, left, right, up, down, row, pitch, yaw, and/or any combination of the foregoing.

An area 122A can represent the critical risk zone of robot 200. For example, area 122A can be a zone in which anything (e.g., people, children, items, and/or other things) present in the zone would be in physical contact with robot 200. As illustrated, area 122A can be relative to the direction of movement, such as that indicated by indicator 120. In some cases, because robot 200 is moving substantially toward the direction of movement, things in the contact zone can be hit by robot 200, thereby increasing force and/or damage of an impact due to the movement of robot 200 (e.g., relative to the situations if the things ran into robot 200 without robot 200 moving).

Similarly, area 122B can represent a higher-risk zone of robot 200. If something is in the higher-risk zone, robot 200 may not have enough time to maneuver before that thing is in area 122A, where it may collide with robot 200.

Area 122C can represent a middle risk zone, and/or a warning zone. If something is in area 122C, robot 200 may have limited maneuverability without colliding with the thing in area 122C. Accordingly, robot 200 can institute particular behaviors to address such risks.

Other areas are contemplated, wherein each area can be associated with a different risk. For example, there can be any number of areas 122A - 122N, where N is any predetermined number based on how many risk areas assessed. For example, other areas can include one or more of a low-risk zone, no-risk zone, rear-risk zone, side-risk zone, damage zone, confined space zone, stopping zone, contact zone, and/or any zone associated with a particular level and/or type of risk.

Returning to FIG. 1A, block 104 includes determining scenarios for mitigating risks. For example, if something is in a certain area, robot 200 can perform certain actions. Such actions can include one or more of stopping, turning, actuating an actuator, stopping an actuator, moving and/or not moving in a direction, performing or not performing a robotic task, and/or any other action that can be performed by robot 200. In some cases, different kinds of stops can be used depending on a situation. These stops can be given different names and/or categorizations. For example, a first category of stop can include a complete shutdown of robot 200. A second category of stop can include powered breaking, where power is applied to actuators (e.g., breaks) to stop robot 200. A third category of stop can include modifying power to one or more actuators of robot 200, such as to slow down operation of robot 200.

As a first example, robot 200 can stop in response to detecting something in a certain area (e.g., area 122A). In some cases, stopping can include stopping navigation, such as braking. In some cases, stopping can include stopping additional functionalities of robot 200, for example, stopping actuators associated with a robotic task. By way of illustration, where robot 200 is a floor cleaner, robot 200 can actuate brushes, vacuums, and/or liquid pumps disposed therein. These brushes, vacuums, and/or liquid pumps can allow robot 200 to clean a floor. When something is in area 122A (or any other predetermined area), robot 200 can turn off these additional functionalities. Moreover, in some cases, robot 200 can perform a substantially complete shutdown (e.g., power off) in response to detecting something in area 122A (or any other predetermined area). As used in this disclosure, stopping can include any of the aforementioned stop functionalities. Such actions may be performed in order to minimize damage due to a collision. In some implementations, instead of shutting down, robot 200 can move (e.g., by actuating a steering actuator and/or an actuator for propulsion) in the opposite direction from what robot 200 was previously moving in order to prevent further damage.

As another example, in response to detecting something in certain areas (e.g., area 122B), robot 200 can perform other actions in response to such detection. For example, robot 200 can be configured to stop when robot 200 detects something (e.g., a person, object, obstacle, etc.) in area 122B. In some cases, the risk characteristics of the areas can be sufficiently mitigated by a stop of robot 200. For example, by stopping, robot 200 can wait for a dynamic object to move out of the way, further assess how robot 200 will navigate around whatever is in area 122B, and/or call for assistance.

As another example, in response to detecting something in certain areas (e.g., area 122C), robot 200 can perform other actions in response to such detection. For example, robot 200 can be configured to slow down when robot 200 detects something (e.g., a person, object, obstacle, etc.) in area 122C. By way of illustration, robot 200 can have enough reaction time to avoid things in area 122C if it slows down and adjusts accordingly. This can prevent what was detected from entering area 122B or area 122A.

Returning to FIG. 1A, block 106 includes defining safety functionalities. Safety functionalities can include assigning predetermined behaviors and/or environmental modifications for operation with robot 200 in recognition of potential shortcomings of robot 200, such as shortcomings in perceptual and/or navigational capabilities. For example, a safety functionality can an include in-person, on-site monitoring and/or shadowing of robot 200. The person can have controls of robot 200, such as a stop button or remote controller, allowing the person to alter the behavior of robot 200. The stop button can cause, at least in part, at least one of the stops described in this disclosure.

As another example, a safety functionality can include closing and/or restricting an environment of robot 200 during operation. For example, where robot 200 includes a floor cleaner, autonomous operation of robot 200 can be restricted to when the environment is closed to a subset of people, such as customers, workers, etc. In some cases, in retail spaces including stores, malls, cafeterias and the like, or warehouses, this can occur at night and/or in off-hours. In other instances, such as airports, train stations, bus terminals, highway service plazas or other transportation facilities, the environment may not be fully closed to people, but autonomous operation of robot 200 may be restricted to off-peak hours. In some implementations, a portion of the environment can be controlled, such as where an area of an environment is restricted and/or has limited access during robotic operation. In some cases, a facility worker can have a control of robot 200, such as through a stop button or remote controller. The stop button can cause at least in part at least one of the stops described in this disclosure.

As another example, a safety functionality can include confining an environment. By way of illustration, sections of a facility can prohibit certain activities (e.g., working, walking, foot traffic, etc.) while robot 200 is operating. As another illustration, sections of a facility can prohibit certain types of people such as unattended children.

As another example, a safety functionality can include general openness to work in an environment, including an environment with general public access.

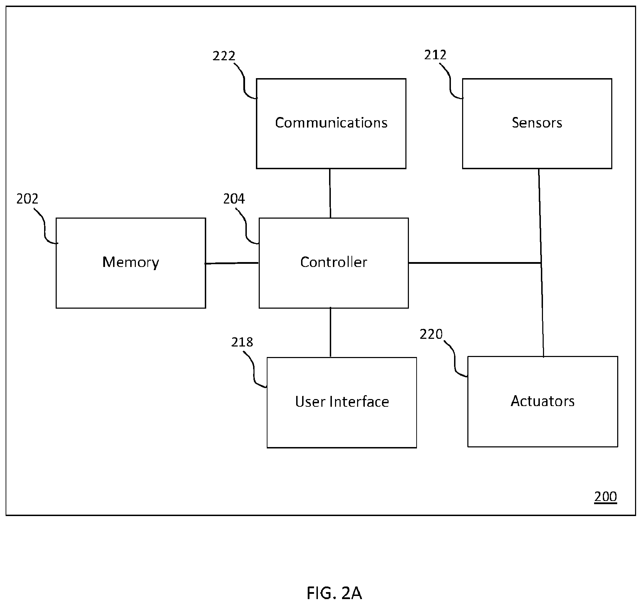

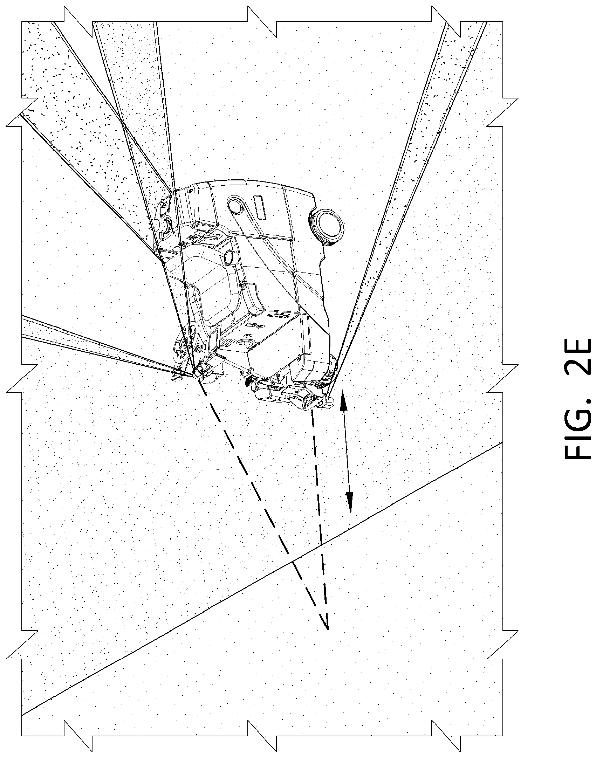

Returning to FIG. 1A, block 108 includes implementing diagnostic tools on control systems. In some cases, the diagnostics can be performed on the output of a sensor, such as by being performed by a controller of robot 200. In some cases, the diagnostics can be outputted by the sensor itself. For example, a control system of robot 200 can be implemented to detect and avoid objects (e.g., people or other obstacles). The control system can be configured to perform a predetermined stop if something is detected in an area around robot 200. For example, if something is detected in one or more of the areas 122A, 122B, and 122C, robot 200 can perform a stop. For example, area 122A can be a critical zone where objects are in contact, or will very soon be in contact, with robot 200. Accordingly, robot 200 can perform a predetermined type of stop in such a situation. For example, the stop can be a shutdown of robot 200, or another type of stop described in this disclosure. As another example, robot 200 can perform a predetermined type of stop when objects are detected in other areas (e.g., areas 122B and 122C). Such stops can be any other stop described in this disclosure. In this example, the diagnostic of this control system can include detection of objects within the respective areas (e.g., zones), such as by a sensor (e.g., a sensor of sensors unit 212, which will be later discussed with reference to FIG. 2A) configured to detect objects and/or the position, orientation, and/or pose of objects (e.g., relative to robot 200).

As another example, the control system can be configured to detect and avoid cliffs or falls, such as vertical falls larger than a predetermined height. For example, the height can be predetermined based at least in part on the propensity for damage to robot 200, the environment, persons, and/or objects if robot 200 were to fall from such a vertical fall. For example, for a larger machine, such a vertical fall can be on the order of centimeters, such as 5, 6, 7, 8, 9, 10, or more centimeters. For smaller robots, larger falls may do less damage. Accordingly, the predetermined height can be determined from one or more factors, such as, the size of the machine, the weight of the machine, the shape of the machine, the materials of the machine, particular features of the machine (e.g., sharp objects), and/or empirical evidence indicative at least in part of safety considerations of the robot. Here, the control system can be a stop (e.g., any stop described in this disclosure) and/or avoidance maneuver. The avoidance maneuver can include turning and/or changing direction of movement. In some cases, the stop and/or avoidance maneuver can be performed by robot 200 if the vertical fall is present in the direction of motion. In this case, the diagnostic can include the detection of a vertical fall, such as by a sensor. Such sensor can be a sensor of sensors unit 212, which will be later discussed with reference to FIG. 2A. In some cases, the sensor can detect distance to a space around robot 200. Where the space increases, it can be indicative at least in part of a slope, cliff, down stair, drop, and/or any vertical change. In some cases, the sudden vertical drops can be problematic because they can cause increased damage. However, in some cases, vertical slopes can also cause damage.

As another example, the control system can be configured to detect aberrations in steering. If the control system detects an inaccuracy in the steering, a predetermined stop can be triggered. The diagnostic can include data from one or more sensors, such as sensors of sensors unit 212 that will be later discussed with reference to FIG. 2A, to detect a characteristic of the steering of robot 200. In some cases, a plurality of sensors can be used in order to detect differences in measurements, which can be indicative at least in part of an inaccuracy in steering. In some cases, different types of data can be compared to detect an inaccuracy in steering, such as sensor data relating to positioning and mapping, gyroscopes, accelerometers, etc.

As another example, a control system can be configured for communication between one or more high-level and low-level architectures (e.g., controllers, software, systems, sensors etc.). Diagnostics can include detecting the status of motor commands received from high-level controller(s) to low-level controller(s). For example, such status detection can detect the delay between sensor acquisition and arrival of updated motor command. If the delay goes above a predetermined maximum threshold, then the diagnostics can fail and a predetermined stop of robot 200 can be implemented. For example, the predetermined maximum delay threshold can be an amount of time, determined from sensor resolution, sensor sensitivity, criticality of functionality of robot 200, environmental hazards, speed of robot 200, empirical determination of typical delays when robot 200 is functional, and/or other factors. For example, such predetermined maximum delay threshold can be 100, 200, 300, 400, 500, 600, or more milliseconds.

As another example, a control system can be configured for stoppage of robot 200, such as by performing any predetermined stop described in this disclosure. Diagnostics can be used to detect engagement of brakes when robot 200 is stopped, turned off, and/or power is lost. Accordingly, the control system can be configured to stop when the diagnostics detect and/or receives a stop command (e.g., from an operator (e.g., through user interface unit 218), remote control (e.g., a stop button such as an emergency stop command), or a controller of robot 200). As another example, the control system can be configured to stop when the diagnostics detect loss of power of robot 200.

As another example, a control system can be configured for people detection and/or avoidance. For example, the control system can identify when people are around and/or the location, orientation, and/or pose of such people relative to robot 200. In some cases, the control system can issue directional commands that enable robot 200 to maneuver around a person. In some cases, the control system can implement a predetermined stop of robot 200. The diagnostics can include sensors, such as sensors of sensors unit 212 configured to detect objects, such as robots in areas (e.g., zones) around robot 200. Diagnostics can also detect delays, errors, and/or problems in sensor of robot 200, which can result in a predetermined stop of robot 200.

FIG. 2A is a functional block diagram of a robot 200 in accordance with some principles of this disclosure. As illustrated in FIG. 2A, robot 200 can include controller 204, memory 202, user interface unit 218, sensors unit 212, actuators unit 220, and communications unit 222, as well as other components and subcomponents (e.g., some of which may not be illustrated). Although a specific implementation is illustrated in FIG. 2A, it is appreciated that the architecture can be varied in certain implementations as would be readily apparent to one of ordinary skill given the contents of the present disclosure. As used herein, robot 200 can be representative at least in part of any robot described in this disclosure. Robot 200 can instantiate one or more of the systems and methods described in this disclosure, such as method 100.

Controller 204 can control the various operations performed by robot 200. Controller 204 can include one or more processors (e.g., microprocessors) and other peripherals. As used herein, processor, microprocessor, and/or digital processor can include any type of digital processing device such as, without limitation, digital signal processors ("DSPs"), reduced instruction set computers ("RISC"), general-purpose ("CISC") processors, microprocessors, gate arrays (e.g., field programmable gate arrays ("FPGAs")), programmable logic device ("PLDs"), reconfigurable computer fabrics ("RCFs"), array processors, secure microprocessors, specialized processors (e.g., neuromorphic processors), and application-specific integrated circuits ("ASICs"). Such digital processors can be contained on a single unitary integrated circuit die, or distributed across multiple components.

Controller 204 can be operatively and/or communicatively coupled to memory 202. Memory 202 can include any type of integrated circuit or other storage device configured to store digital data including, without limitation, read-only memory ("ROM"), random access memory ("RAM"), non-volatile random access memory ("NVRAM"), programmable read-only memory ("PROM"), electrically erasable programmable read-only memory ("EEPROM"), dynamic random-access memory ("DRAM"), Mobile DRAM, synchronous DRAM ("SDRAM"), double data rate SDRAM ("DDR/2 SDRAM"), extended data output ("EDO") RAM, fast page mode RAM ("FPM"), microcontroller (e.g., STM), reduced latency DRAM ("RLDRAM"), static RAM ("SRAM"), flash memory (e.g., NAND/NOR), memristor memory, pseudostatic RAM ("PSRAM"), etc. Memory 202 can provide instructions and data to controller 204. For example, memory 202 can be a non-transitory, computer-readable storage apparatus and/or medium having a plurality of instructions stored thereon, the instructions being executable by a processing apparatus (e.g., controller 204) to operate robot 200. In some cases, the instructions can be configured to, when executed by the processing apparatus, cause the processing apparatus to perform the various methods, features, and/or functionality described in this disclosure. Accordingly, controller 204 can perform logical and/or arithmetic operations based on program instructions stored within memory 202. In some cases, the instructions and/or data of memory 202 can be stored in a combination of hardware, some located locally within robot 200, and some located remote from robot 200 (e.g., in a cloud, server, network, etc.).

In some implementations, sensors unit 212 can comprise systems and/or methods that can detect characteristics within and/or around robot 200. Sensors unit 212 can comprise a plurality and/or a combination of sensors. Sensors unit 212 can include sensors that are internal to robot 200 or external, and/or have components that are partially internal and/or partially external. In some cases, sensors unit 212 can include one or more exteroceptive sensors, such as sonars, light detection and ranging ("LIDAR") sensors, radars, lasers, cameras (including video cameras (e.g., red-blue-green ("RBG") cameras, infrared cameras, three-dimensional ("3D") cameras, thermal cameras, etc.), time of flight ("TOF") cameras, structured light cameras, antennas, motion detectors, microphones, and/or any other sensor known in the art. In some implementations, sensors unit 212 can collect raw measurements (e.g., currents, voltages, resistances, gate logic, etc.) and/or transformed measurements (e.g., distances, angles, detected points in obstacles, etc.). In some cases, measurements can be aggregated and/or summarized. Sensors unit 212 can generate data based at least in part on measurements. Such data can be stored in data structures, such as matrices, arrays, queues, lists, arrays, stacks, bags, etc. In some implementations, the data structure of the sensor data can be called an image.

In some implementations, sensors unit 212 can include sensors that can measure internal characteristics of robot 200. For example, sensors unit 212 can measure temperature, power levels, statuses, and/or any characteristic of robot 200. In some cases, sensors unit 212 can be configured to determine the odometry of robot 200. For example, sensors unit 212 can include proprioceptive sensors, which can comprise sensors such as accelerometers, inertial measurement units ("IMU"), odometers, gyroscopes, speedometers, cameras (e.g. using visual odometry), clock/timer, and the like. Sensors unit 212 can include encoders configured to sense attributes of robot 200, such as wheel encoders configured to measure wheel rotations and/or speed, steering encoders configured to determine the angle of steering columns, etc. Odometry can facilitate autonomous navigation and/or autonomous actions of robot 200. This odometry can include the position of robot 200 (e.g., where position can include robot's location, displacement and/or orientation, and can sometimes be interchangeable with the term pose as used herein) relative to the initial location. Such data can be stored in data structures, such as matrices, arrays, queues, lists, arrays, stacks, bags, etc. In some implementations, the data structure of the sensor data can be called an image. In some cases, sensors of sensors unit 212 can be safety-rated and/or not safety-rated. An advantage of the systems and methods of the present disclosure is that they can enable safe operation of a robot even if sensors are not safety-rated. In order to calibrate and/or set up robot 200, reference objects can be used, such as in an environment and/or during manufacturing/assembly.

In some implementations, controller 204 can include a mapping and localization unit that can receive sensor data from sensors unit 212 to localize robot 200 in a map. In some implementations, the mapping and localization unit can include localization systems and methods that allow robot 200 to localize itself in the coordinates of a map and/or relative to a location (e.g., an initialization location, end location, beacon, reference point, etc.). The mapping and localization unit can also process measurements taken by robot 200, such as by generating a graph and/or map.

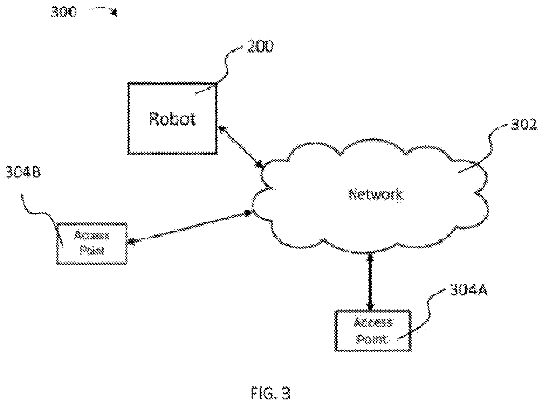

In some implementations, robot 200 can map and learn routes through a learning process. For example, an operator can teach robot 200 where to travel in an environment by driving robot 200 along a route in an environment. Through a combination of sensor data from sensor units 212, robot 200 can determine robot 200's relative poses and the poses of items in the environment. In this way, robot 200 can determine where it is in an environment and where it has travelled. Robot 200 can later recall where it travelled and travel in a substantially similar way (though it may avoid certain obstacles in subsequent travels). Robots can share such experiences with each other, such as through network 302 (which will be described with reference to FIG. 3). In some implementations, the mapping and localization unit can be used to carry forth method 100, including but not limited to receiving and/or determining a path, making adjustments to the path, and determining actuator commands.

In some implementations, user interface unit 218 can be configured to enable a user to interact with robot 200. For example, user interface unit 218 can include touch panels, buttons, keypads/keyboards, ports (e.g., universal serial bus ("USB"), digital visual interface ("DVI"), Display Port, E-Sata, Firewire, PS/2, Serial, VGA, SCSI, audioport, high-definition multimedia interface ("HDMI"), personal computer memory card international association ("PCMCIA") ports, memory card ports (e.g., secure digital ("SD") and miniSD), and/or ports for computer-readable medium), mice, rollerballs, consoles, vibration feedback, audio transducers, and/or any interface for a user to input and/or receive data and/or commands, whether coupled wirelessly or through wires. Users can interact through voice commands or gestures. User interface units 218 can include a display, such as, without limitation, liquid crystal display ("LCDs"), light-emitting diode ("LED") displays, LED LCD displays, in-plane-switching ("IPS") displays, cathode ray tubes, plasma displays, high definition ("HD") panels, 4K displays, retina displays, organic LED displays, touchscreens, surfaces, canvases, and/or any displays, televisions, monitors, panels, and/or devices known in the art for visual presentation. In some implementations user interface unit 218 can be positioned on the body of robot 200. In some implementations, user interface unit 218 can be positioned away from the body of robot 200, but can be communicatively coupled to robot 200 (e.g., via communication units including transmitters, receivers, and/or transceivers) directly or indirectly (e.g., through a network, server, and/or a cloud). In some implementations, user interface unit 218 can include one or more projections of images on a surface (e.g., the floor) proximally located to the robot, e.g., to provide information to the occupant or to people around the robot. The information could be the direction of future movement of the robot, such as an indication of moving forward, left, right, back, at an angle, and/or any other direction. In some cases, such information can utilize arrows, colors, symbols, etc.

In some implementations, communications unit 222 can include one or more receivers, transmitters, and/or transceivers. Communications unit 222 can be configured to send/receive a transmission protocol, such as BLUETOOTH^{®}, ZIGBEE^{®}, Wi-Fi, induction wireless data transmission, radio frequencies, radio transmission, radiofrequency identification ("RFID"), near-field communication ("NFC"), infrared, network interfaces, cellular technologies such as 3G (3GPP/3GPP2), high-speed downlink packet access ("HSDPA"), high-speed uplink packet access ("HSUPA"), time division multiple access ("TDMA"), code division multiple access ("CDMA") (e.g., IS-95A, wideband code division multiple access ("WCDMA"), etc.), frequency hopping spread spectrum ("FHSS"), direct sequence spread spectrum ("DSSS"), global system for mobile communication ("GSM"), Personal Area Network ("PAN") (e.g., PAN/802.15), worldwide interoperability for microwave access ("WiMAX"), 802.20, long term evolution ("LTE") (e.g., LTE/LTE-A), time division LTE ("TD-LTE"), global system for mobile communication ("GSM"), narrowband/frequency-division multiple access ("FDMA"), orthogonal frequency-division multiplexing ("OFDM"), analog cellular, cellular digital packet data ("CDPD"), satellite systems, millimeter wave or microwave systems, acoustic, infrared (e.g., infrared data association ("IrDA")), and/or any other form of wireless data transmission.

As used herein, network interfaces can include any signal, data, or software interface with a component, network, or process including, without limitation, those of the FireWire (e.g., FW400, FW800, FWS800T, FWS1600, FWS3200, etc.), universal serial bus ("USB") (e.g., USB 1.X, USB 2.0, USB 3.0, USB Type-C, etc.), Ethernet (e.g., 10/100, 10/100/1000 (Gigabit Ethernet), 10-Gig-E, etc.), multimedia over coax alliance technology ("MoCA"), Coaxsys (e.g., TVNET^{™}), radio frequency tuner (e.g., in-band or OOB, cable modem, etc.), Wi-Fi (802.11), WiMAX (e.g., WiMAX (802.16)), PAN (e.g., PAN/802.15), cellular (e.g., 3G, LTE/LTE-A/TD-LTE/TD-LTE, GSM, etc.), IrDA families, etc. As used herein, Wi-Fi can include one or more of IEEE-Std. 802.11, variants of IEEE-Std. 802.11, standards related to IEEE-Std. 802.11 (e.g., 802.11 a/b/g/n/ac/ad/af/ah/ai/aj/aq/ax/ay), and/or other wireless standards.

Communications unit 222 can also be configured to send/receive signals utilizing a transmission protocol over wired connections, such as any cable that has a signal line and ground. For example, such cables can include Ethernet cables, coaxial cables, Universal Serial Bus ("USB"), FireWire, and/or any connection known in the art. Such protocols can be used by communications unit 222 to communicate to external systems, such as computers, smart phones, tablets, data capture systems, mobile telecommunications networks, clouds, servers, or the like. Communications unit 222 can be configured to send and receive signals comprising of numbers, letters, alphanumeric characters, and/or symbols. In some cases, signals can be encrypted, using algorithms such as 128-bit or 256-bit keys and/or other encryption algorithms complying with standards such as the Advanced Encryption Standard ("AES"), RSA, Data Encryption Standard ("DES"), Triple DES, and the like. Communications unit 222 can be configured to send and receive statuses, commands, and other data/information. For example, communications unit 222 can communicate with a user operator to allow the user to control robot 200. Communications unit 222 can communicate with a server/network (e.g., a network) in order to allow robot 200 to send data, statuses, commands, and other communications to the server. The server can also be communicatively coupled to computer(s) and/or device(s) that can be used to monitor and/or control robot 200 remotely. Communications unit 222 can also receive updates (e.g., firmware or data updates), data, statuses, commands, and/or other communications from a server for robot 200.

Actuators unit 220 can include any system used for actuating, which in some cases can actuate to perform tasks. For example, actuators unit 220 can include driven magnet systems, motors/engines (e.g., electric motors, combustion engines, steam engines, and/or any type of motor/engine known in the art), solenoid/ratchet system, piezoelectric system (e.g., an inchworm motor), magnetostrictive elements, gesticulation, and/or any actuator known in the art. In some implementations, actuators unit 220 can include systems that allow movement of robot 200, such as motorized propulsion. For example, motorized propulsion can move robot 200 in a forward or backward direction, and/or be used at least in part in turning robot 200 (e.g., left, right, and/or any other direction). By way of illustration, actuators unit 220 can control if robot 200 is moving or is stopped and/or allow robot 200 to navigate from one location to another location.

One or more of the units described with respect to FIG. 2A (including memory 202, controller 204, sensors unit 212, user interface unit 218, actuators unit 220, communications unit 222, and/or other units) can be integrated onto robot 200, such as in an integrated system. However, in some implementations, one or more of these units can be part of an attachable module. This module can be attached to an existing apparatus to automate so that it can behave as a robot, but can still be operated by a person. In such instances, the unit may serve as an extra level of safety to help the operator avoid hazards. Alternatively, an existing apparatus can be configured to operate autonomously, controlled by the unit described herein. Accordingly, the features described in this disclosure with reference to robot 200 can be instantiated in a module that can be attached to an existing apparatus and/or integrated onto robot 200 in an integrated system. Moreover, in some cases, a person having ordinary skill in the art would appreciate from the contents of this disclosure that at least a portion of the features described in this disclosure can also be run remotely, such as in a cloud, network, and/or server.

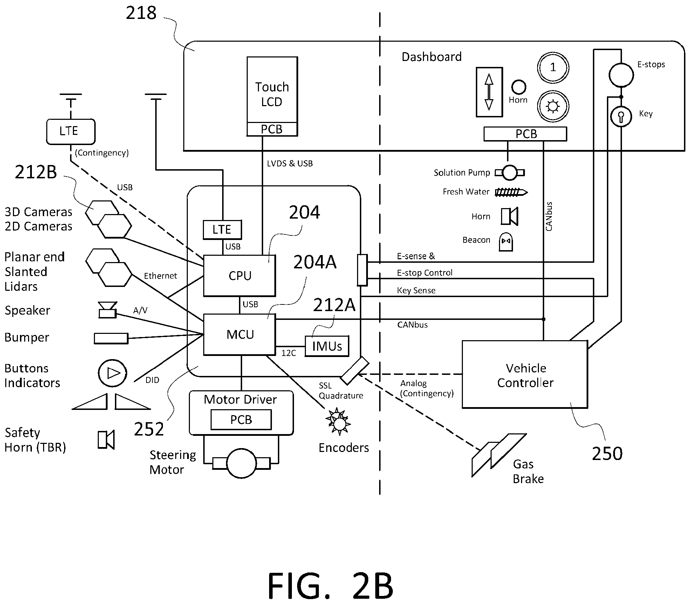

FIG. 2B is a functional block diagram of an implementation of at least a portion of robot 200 as illustrated in FIG. 2A, where robot 200 is a mobile platform with an attached robotic module 252 in accordance to some implementations of this disclosure. Module 252 can include controller 204 and be communicatively and/or operatively coupled to sensors of robot 200, such as sensors 212A and 212B, which can be sensors of sensors unit 212. Moreover, there can be additional controllers substantially similar to controller 204, such as controller 204A, which can be communicatively and/or operatively coupled to various portions of robot 200, such as motor drives, encoders, buttons, bumpers, horns, and/or any other element.

Module 252 can be communicatively and/or operatively coupled to vehicle controller 250, which can be substantially similar to controller 204, but control various elements of the mobile platform. This vehicle controller 250 may be present in non-autonomous versions of the mobile platform on which robot 200 is based. Accordingly, module 252 can attach to that mobile platform, become communicatively and/or operatively coupled to vehicle controller 250, and/or form robot 200. For example, vehicle controller 250 can be communicatively and/or operatively coupled to various components of the mobile platform. Such components can include one or more solution pumps, water tanks, horns, beacons, e-stops, user interface (e.g., dashboard), mobility controls (e.g., brake pedal, gas pedal, keys, steering wheels, etc.). Accordingly, at least some functionality that is controlled by vehicle controller 250 can be controlled by controller 204 and/or controller 204A.

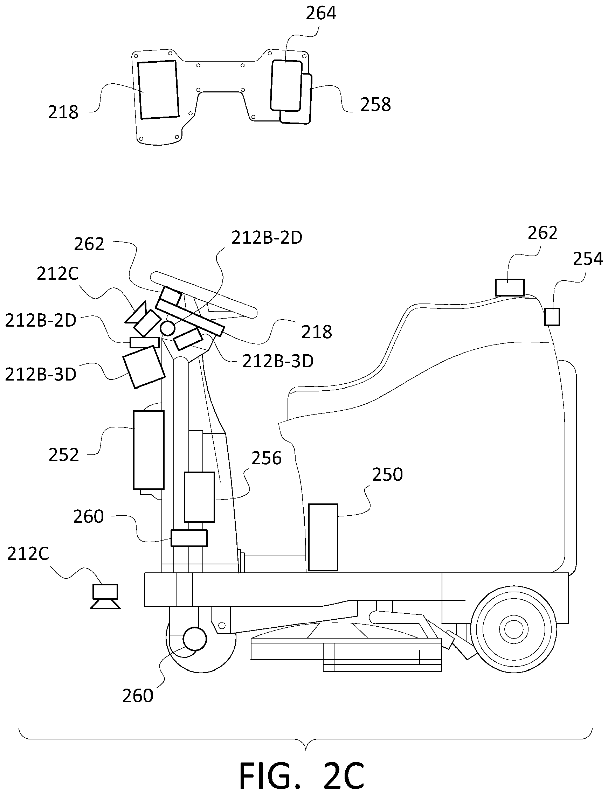

Figure 2C shows a representation of a riding floor cleaner equipped with a control module 252 and associated units as described herein. Sensors associated with the control module 252 include inertial motion units 212A (not shown), 3D cameras 212B-3D, 2D cameras 212B-2D and LiDARs 212C. Notably, the sensors may be positioned on the floor cleaner remotely from the control module 252 so that they can sense the environment as described in more detail below. A start/pause button 254 can turn on, turn off, and/or pause the control module 252. The control module 252 also controls a motor amp module 256 that drives the robot. Shown in the inset is a representation of the dashboard, on which is mounted a touch screen module 218 and a vehicle interface board 258 to allow an operator to interact with and program the control module.

Figure 2C also shows features of the floor cleaner installed by the original equipment manufacturer (OEM) including encoders 260, e-stops 262, vehicle controller 250, and vehicle control panel on the dashboard. Those features can be used to control the floor cleaner when the control module 252 is not enabled. When the control module is enabled, it may control one or more of those features. For example, at least some functionality that is controlled by vehicle controller 250 can be controlled by controller 204 and/or controller 204A. Notably, when the floor cleaner robot is operated autonomously with no driver, some of the e-stops 262 may need to be overridden by the control module to allow the robot 200 to move.

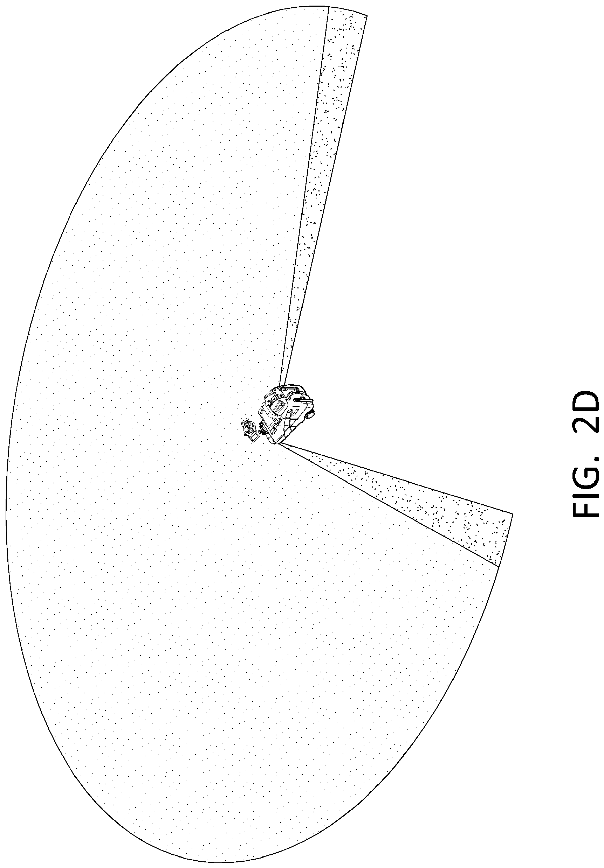

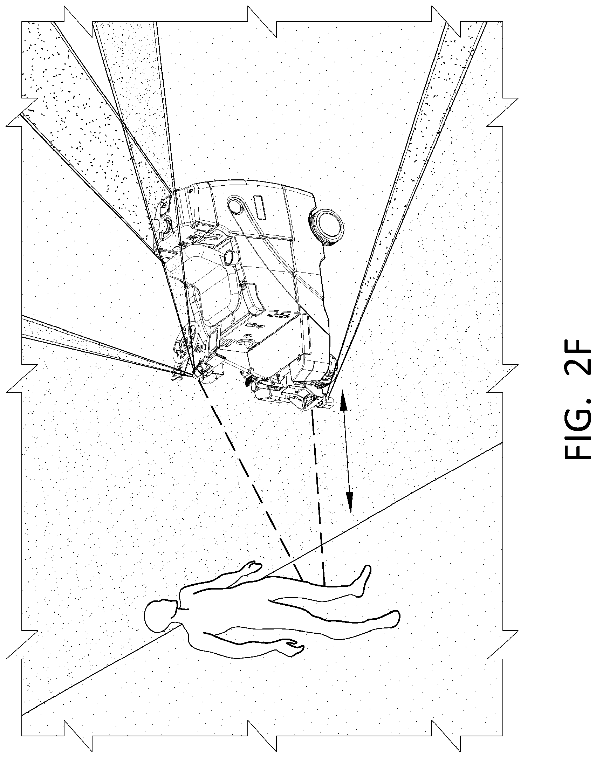

Two two-dimensional LiDARs are used to detect a person or other object in front of the robot. One LiDAR is mounted parallel to the ground near the lower front of the robot and the other is mounted on the top frontal area of the robot looking down. The mounting of the LiDARs is dependent on factors such as the size, speed and stopping distance of the robot. For example, the lower LiDAR is mounted parallel to the ground at less than about 20 cm, such as about 18 cm, height; the other (top) LiDAR is mounted on the top frontal area of the robot looking down (such as at about 45 to 60° tilt, or about 50° tilt) so that its visual field intersects the ground at slightly more than the stopping distance of the robot at top speed. For example the top LiDAR may be aimed 0.9 m out relative to the front of the robot if 0.8m is the stopping distance of the robot. The lower LiDAR may be aimed straight ahead of the robot. The LiDARS provide overlapping sensing ranges to the front and sides of the robot as shown in Figures 2D-2F. The top (tilted/slanted) LIDAR uses the ground (floor) as a "reference target". The aiming vectors (dashed lines) of the two LiDARs desirably intersect at a distance slightly longer, such as 10 to 20 % longer, than the stopping distance of the robot (double headed arrow), and provide a triangulation to redundantly determine the range of the stopping distance of the robot. When a person or object is in the path of the robot as shown in Figure 2F, both LiDARs sense the visual obstruction and the triangulation is broken when the person is near the stopping distance of the robot. The control module 252 initiates one or more procedures to avoid the person as described in more detail below. Optionally additional LiDARs may be positioned at the rear of the robot to provide ranging when the robot is operating in reverse (not shown).

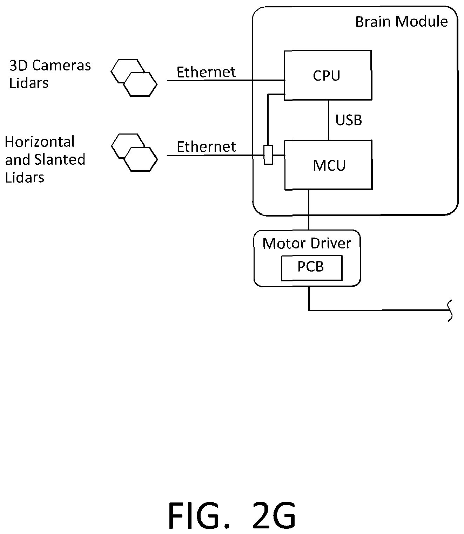

Figure 2G shows a schematic of the operational connectivity of sensors with the control module 252. The LiDARs may be directly connected to an STM microcontroller (MCU in Fig. 2B and 2F) via ethernet. Diagnostics/tests are implemented on the MCU. The MCU sends a stop command to the Motor Driver if LiDAR diagnostics fail. The LiDARs can include any commercially available LIDARs such as those available from SICK or Hokoyo. In one implementation, SICK TiM 5xx LiDARs may be used. Cameras may also be connected to the CPU and/or MCU by Ethernet, and may augment sensory information to the control module

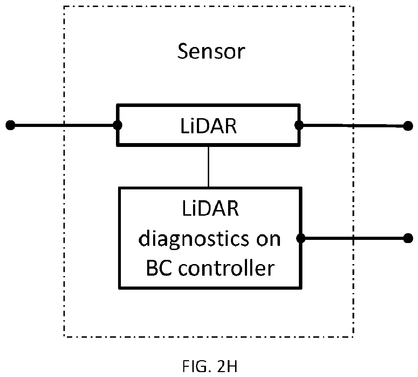

As shown schematically in Figure 2H, the desired fault tolerance is achieved with a Subsystem C architecture (as in EN 62061): P*_{sensor's dangerous failure}* = λ_{TiM X} (1 - DC), where *DC* is the rate between the sensor's dangerous detected failure rates (λ*_{D detected}*) and the TiM LiDAR's total dangerous failure rates (*λ_{D total}*): DC = *λ_{D detected}*/*λ_{D total}.*

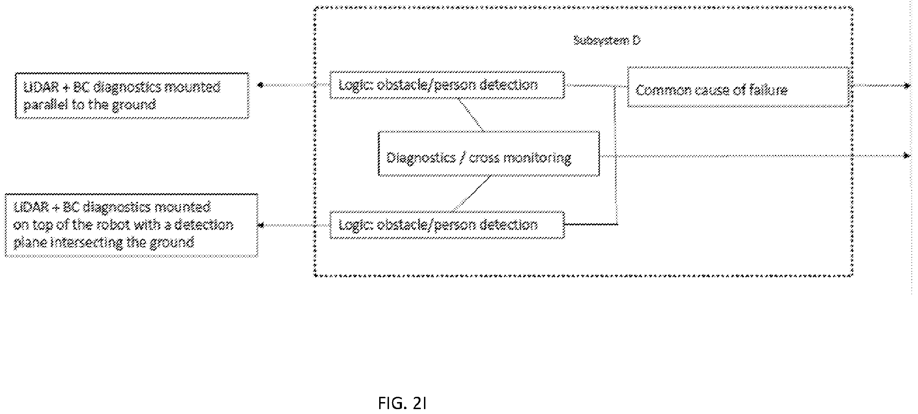

As shown in Figure 2I, redundant architecture (Subsystem D as in EN 62061) for hazard detection includes two LiDARs (lower parallel and top slanted) that provide input to BC controller(s) to detect the presence of a person or object in the robot's protection area. Person detection logic is cross-checked. For each LiDAR/input the desired reliability is ensured with diagnostic coverage (implemented on BC controller).

Sensor failure modes of the LiDARs include for example those wherein:
the LiDARis not sending any data and/or data is received by the host controller a delay;
software/firmware on the LiDAR gets stuck sending the same data repeatedly;
ranging data on the LiDARTiM 5xx gets corrupted (i.e. malfunctioning sensor);
data gets corrupted over transmission from the LiDAR to the host controller;
the LiDAR gets misaligned on the robot; or
the LiDAR is not generating/reporting valid ranging data for a person in its visual field.

Diagnostics are designed to detect sensor failure and verify that the sensor is operating correctly, as summarized in Table 1.

**Table 1**

| Prerequisites for diagnostics | | How often? |
|---|---|---|
| Mount both LiDARs in a way that each LiDAR is seeing in a small part of its visual field the chassis of the robot. Additionally, the top LiDAR is mounted in a way that its ranging plane intersects the ground in front of the robot. | | |
| The region of visual field corresponding to the chassis of the robot is referred to as its "target area". The ranging and intensity values read in the target area are referred to as "target data". The target area and target data are stored on the host computer. | | At calibration, e.g. as part of the end-of-manufacturing-line calibration process. |
| The region of the visual field in front of the robot that intersects the ground is referred to as the "ground area". | | |
| Register time of TiM 5xx LiDAR (sensor) to the host controller. | | |
| Requirements: | | |
| | timestamp is transmitted in the sensor data package, where timestamp for the sensor data must be generated on the sensor and sent to the host controller (i.e. data timestamp is not generated by the driver on the host controller) | At startup and at least once per autonomous operation. |
| | error codes generated as part of the self-diagnostics inside the sensor are transmitted to the host controller | |
| Application/settings: | | |
| | apply desired LiDAR settings | At calibration, e.g. part of manufacturing / calibration process |
| | verify settings | |

| | | |
|---|---|---|
| LiDAR diagnostics, implemented on the host controller: | | |

| | | |
|---|---|---|
| Correct operation | | At least once before autonomous operation |
| | operator walk around the robot and verify that LiDAR is reading/seeing the person | |
| Correct application/settings. Assert: | | |
| | configuration/settings on is correct: verify current settings against desired LiDAR settings. | Periodically during autonomous operation |
| | apply changes to the LiDAR settings (e.g. turn on/off light emission) and verify that data value change as expected | |
| Timestamp and checksum. Assert: | | |
| | sensor timestamp is increasing | |
| | difference between current and previous sensor timestamp is below threshold | Each frame and/or each cycle in the control loop |
| | elapsed time since the last received sensor data is below threshold; i.e. sensor data arrives with desired frequency | |
| | sensor data integrity/checksum | |
| Check data corruption. Assert: | | |
| | error codes in the sensor data package from the LiDAR do not indicate false operation | Each frame |
| | values read in the target area are matching target data | |
| | target data has a small but non-zero variance | |
| Additional heuristics: | | |
| | check data integrity over time | |
| | check data integrity over space | Each frame |
| | assert acceptable change in the data from frame to frame | |
| | assert that the top LiDAR is providing ranging data in the ground area (e.g. a non-reflective object may be invisible to the LiDAR) | |
| | assert LiDAR is not misaligned (e.g. due to impact) - use target area | |

As illustrated in Figure 2C, one LiDAR is mounted parallel to the ground at less than 20 cm height; the second LiDAR is mounted on the top frontal area of the robot looking down in an angle ( e.g. at about a 50° tilt). Both LiDARs, the lower-parallel and the top-tilted, can be used to detect an obstacle and/or a person in front of the robot. For reliable, or safety critical, object detection the control system needs to operate reliably and needs to have the capacity of detecting obstacles. LiDARs may have a specification of a maximum detection range of 8m for objects with 10% reflectivity. In the proposed configuration, however, the control system can detect any object and/or person, regardless of the reflectivity property of the material the object and/or the person is covered, and stop the robot. For example, if a person wearing cloth with 1.8% reflectivity stands in the direction of motion of the robot, the control system will detect the person and safely stop the robot.

This is because the top LiDAR is sensing the ground (floor) and not a person or an object in the path of the robot. The control system uses redundancy, two LiDARs, and the ground as the reference target. The top LiDAR is configured to aim at and sense the ground in front of the robot, and stop the robot if the LiDAR is not sensing the ground. The top LiDAR is configured to detect the pre-determined/pre-configured contour of the ground. For example, the LiDAR expects to sense a level ground in front of it. When the top LiDAR senses a range shorter than that expected by using the ground as a reference, the controller is configured to determine that the non-expected range is indicative of an obstruction such as a person or object in its path. When the top LiDAR senses a range longer than that expected by using the ground as a reference, the controller is configured to determine that the non-expected range is indicative of a vertical gap or depression such as a stairway in its path. The sensing of the ground may also be enhanced by monitoring camera sensors and comparing to the expected visual image of the ground. In the absence of seeing the ground, that is, not reading the pre-configured values of the contour of the ground, the control system reading the values of the top LiDAR is configured to stop the robot. This, not reading the reference value of the ground, can happen if
there is a visible obstacle and/or person in front of the robot, and/or
there is a vertical gap, e.g. stairs going down; docking gate; etc., and/or
there is an object/person in front of the robot that the LiDAR cannot see/detect.
In all these instances, the LiDAR will fail to see/detect the ground in front of the robot, and the control system will thereby stop the robot.

For additional redundancy, the control system can be configured to detect discrepancy in the ranging data from the lower LiDAR (mounted parallel to the ground) and the top LiDAR (mounted tilted/slanted to see the ground), such as indicating a break in the triangulation shown in Figure 2F. In case there is inconsistency in the ranging data from the LiDARs, the control system can be configured to stop the robot.

In some implementations, robot 200 can be communicatively coupled to a network. FIG. 3 is a functional block diagram of system 300, which includes robot 200 communicatively and/or operatively coupled to network 302 in accordance with some implementations of this disclosure. Network 302 can comprise a collection of hardware, software, services, and/or resources that can be invoked to instantiate a virtual machine, process, or other resource for a limited or defined duration, or an unlimited or undefined duration. Network 302 can be communicatively and/or operatively coupled to a plurality of devices, systems, and/or servers, including devices and/or servers that have access to the internet. One or more of access points, such as access points 304A and 304B, can be devices, systems, and/or servers, including, but not limited to, computers, mobile devices, tablets, smart phones, cells phones, personal digital assistants, phablets, e-readers, smart watches, set-top boxes, internet streaming devices, gaming consoles, smart appliances, and/or any device with access to the internet and/or any network protocol. Although two access points are illustrated, there can be more or fewer access points as desired.

As used herein, network 302 can be operated: network 302 can have onboard computers that can receive, process, and/or send information. These computers can operate autonomously and/or under control by one or more human operators. Similarly, network 302 can have access points (e.g., access points 304A and 304B), which can similarly be used to operate network 302. The access points can have computers and/or human operators that can receive, process, and/or send information. Accordingly, references herein to operation of network 302 can be applied to a human operator and/or a computer operator.

In some implementations, one or more robots that are substantially similar to robot 200 can be communicatively and/or operatively coupled to network 302. Each of these robots can communicate statuses, commands, and/or operative data to network 302. Network 302 can also store and/or communicate statuses, commands, and/or operative data to these one or more of robots. In some cases, network 302 can store maps, sensor data, and other information from robot 200 and/or other robots. Network 302 can then share experiences of a plurality of connected robots to each other. Moreover, with the aggregation of information, network 302 can performed machine learning algorithms to improve performance of the robots.

A person having ordinary skill in the art would appreciate from the contents of this disclosure that some portions of this disclosure may be performed by robot 200, network 302, and/or access points 304A and/or 304B. Though certain examples may be described with reference to one or more of robot 200, network 302, and/or access points 304A and/or 304B, it would be appreciated that the features of the examples can be distributed amongst robot 200, network 302, and/or access points 304A and/or 304B to achieve substantially similar results.

In some implementations, control systems can use non-safety-rated (e.g., not in accordance to Performance Levels outlined in standards, such as EN ISO 13849-1 and/or EN 62061) sensors and/or controllers. However, through systems and methods of this disclosure, through tests and diagnostics, the data received from such sensors and the communications between controller(s) and/or high-level architecture can perform substantially similarly to those that are safety-rated. In some cases, in scenarios that can affect the safety of operation of robot 200 (e.g., test and/or diagnostic failure), robot 200 can stop. Advantageously, this can allow robot 200 to use off-the-shelf parts and/or newer, better technology.

Moreover, in other implementations, the Performance Level or Safety Integrity Level is based on EN 62061 including Safety Integrity Level 2. Such implementations include detecting a person in front of the robot device so that the device can determine and carry out a sequence of actions to avoid hitting the person in the robot's current or pending direction of motion. In some instances, the device is also configured to detect and avoid hitting a person in the rear of the device when the device is moving in its reverse direction.

Diagnostics are implemented on a controller described herein to achieve the desired safety integrity level. Disclosed herein are aspects of a controller and system configured to stop the robot in case a diagnostic error is detected, including a person or object in the path of the robot.

By way of illustration, a control system can be configured to detect and avoid people, obstacles, and/or cliffs. The system can issue a predetermined stop if an obstacle is present in area around robot 200 (e.g., areas 122A - 122C). By way of illustration, robot 200 can perform a category 0 stop, which can include immediate removal of power to the actuators of robot 200. Such a stop may include an operator's attention to re-enable power to the actuators. Such a category 0 stop can be performed if an obstacle is detected in area 122A while robot 200 is moving and/or if data from one or more sensors of sensors unit 212 is corrupted. As another example, robot 200 can perform a category 1 stop, which can include a controlled stop with power available to the actuators of robot 200 and then removal of such power when the robot stops. Such a category 1 stop can be performed in response to detecting an obstacle in area 122A and/or if data from sensors of sensors unit 212 is corrupted. In some cases, such sensor data can include LiDAR data and/or depth camera data, which robot 200 can rely on for navigation. In some cases, the controller can relay sensor data to high-level architecture. In some cases, the category stop 1 can retain power to certain actuators/systems of robot 200 when power to other actuators/systems is removed. As another example, a category 2 stop can include a controlled stop with modified power left available to the actuators of robot 200. Such a category 2 stop can be used if data from sensors of sensors unit 212 is corrupted and/or if motor commands from high-level architecture is corrupted and/or delayed. Advantageously, such a system and diagnostics can allow the safe operation of robot 200 around people obstacles, and/or cliffs.

For example, in some implementations, a control system can include a sensor of sensors unit 212 configured for data acquisition. The sensor can use a transmission protocol (e.g., transmission control protocol/internet protocol) for communication of the sensor data, such as by utilizing a bus and/or communications of communications unit 222. A robotic controller (e.g., controller 204 and/or 204A) can perform diagnostics of the sensor data, such as the status of the sensor data. In some cases, the diagnostics can be performed by the sensor itself. In cases where a diagnostic or test does not result in a detected issue (e.g., problem found in robot200), the robotic controller can process/relay high-level motor commands. If such sensor data is corrupted and/or delayed within a predetermined maximum delay threshold, the controller can issue a category 0 or category 1 stop. The stop command can be issued to the controller that controls the relevant actuators of robot 200 to perform the stop. Advantageously, such systems and diagnostics can allow robot 200 to stop if there is an indication of possible issue (and/or failure) of sensors, which can be important in the navigation of robot 200.

As another example, if a robotic controller of robot 200 detects robot 200 is moving and that an obstacle is in area 122A, the controller can determine that a category 0 or category 1 stop should be issued. That robotic controller can then issue the stop command to the controller that controls the relevant actuators of robot 200 to perform the stop. Advantageously, such systems and diagnostics can allow robot 200 to stop prior to exacerbating a collision.

As another example, a robotic controller of robot 200 can derive the velocity and/or direction of motion of robot 200 based at least in part on the speed and/or angle of robot 200. In some cases, robot 200 can derive an area (e.g., area 122B) in which robot 200 should stop if an object is detected. If an object is detected, robot 200 can determine that a category 0 or category 1 stop should be issued. That robotic controller can then issue the stop command to the controller that controls the relevant actuators of robot 200 to perform the stop. Advantageously, such systems and diagnostics can allow robot 200 to stop if there is an indication of possible issue (and/or failure) of controls, where robot 200 could do damage if robot 200 cannot accurately determine the velocity and direction of motion.

As another example, a robotic controller of robot 200 can relay sensor data to high-level architecture. The data can be used by the high-level architecture to generate motor commands, which can be utilized (e.g., by controller) to control actuators. In the case that a motor command is detected to be corrupted, a category 0 or category 1 stop can be issued to the controller that controls the relevant actuators of robot 200 to perform the stop. Advantageously, such systems and diagnostics can allow robot 200 to stop if there are issues with motor commands, which could result in inaccurate movements. In some cases, such inaccurate movements could cause robot 200 to have a collision.

In some implementations, steering safety can be achieved using redundant and/or independent sensors configured to calculate the direction of motion. Diagnostic tools can provide reliable operation, or stop robot 200 otherwise. In some cases, the control system can output direction of motion information for dynamically changing an area (e.g., area 122A and/or a stopping area) of robot 200. In some cases, diagnostics can include testing of the robotic controller (e.g., during manufacturing or in use), where robot 200 turns to extremes (e.g., turning a steering wheel to two extremes) to verify the calibration of the steering. These extremes can include a predefined range. The diagnostics can include: detection of erratic movement commands; comparison of angular velocity from (a) steering position (e.g., encoder on a steering column), (b) speed, and/or (c) IMUs (e.g., gyroscope); comparison of expected steering positions and measured steering positions; and/or compare values read by a plurality of sensors measuring the same attribute, such as two IMUs (e.g., gyroscopes). For example, if the angular velocity comparison shows a discrepancy (e.g., a discrepancy above a predetermined threshold of distance and/or time), the robotic controller can issue a predetermined stop. As another example, if the comparison of the expected steering position with the measured steering position finds a discrepancy above a predetermined threshold, the robotic controller can perform a predetermined stop. Similarly, if the comparison of values read by the plurality of sensors finds a discrepancy, the robotic controller can perform a predetermined stop. Advantageously, such systems and diagnostics can allow robot 200 to stop if there are issues with steering, which could result in inaccurate movements. In some cases, such inaccurate movements could cause robot 200 to have a collision.

In some implementations, speed (e.g., speed of movement) safety can be performed using run-time diagnostics. For example, a control system can enforce a maximum speed, disable manual control during autonomous operation of robot 200, and/or prevent backwards movement when robot 200 is autonomous operating. Setting up the maximum speed can include calibration/configuration. This calibration/configuration can include end of production line calibration (and/or calibration/configuration at another point in time) of a current speed controller (and/or encoder) with respect to readings from wheel encoder(s). This calibration/configuration can allow the maximum speed to be set, such as by identifying the maximum current draw and/or sent voltage corresponding to the maximum speed. Diagnostics can include one or more of: reading current draw from motor (e.g., traction motor) via robotic controller, reading wheel encoder data, checking that no higher than the maximum speed is issued from a controller, and/or measuring maximum value current draw (and/or voltage level) of wheel encoder data (e.g., that such current draw and/or voltage level is below a predetermined threshold based on calibration/configuration). In the case where the current draw from the motor via the robotic controller exceeds the current draw associated with the maximum speed, robot 200 can determine the maximum speed has been exceed. Where the wheel encoder data indicates that robot 200 is moving faster than measurements (e.g., voltage, current, speed values) associated with the maximum speed, robot 200 can determine the maximum speed has been exceeded. Where the checked speed issued from a controller is greater than the maximum speed, robot 200 can determine the maximum speed has been exceed. Where the maximum value current draw (and/or voltage level) of wheel encoder data exceeds a value associated with the maximum speed, robot 200 can determine the maximum speed has been exceeded. In some cases where robot 200 detects that robot 200 is above the maximum speed, robot 200 can slow down the machine until robot 200 is no longer above the maximum speed. In some cases where robot 200 detects that robot 200 is above the maximum speed, robot 200 can issue a stop, such as a category 0 or category 1 or category 2 stop. In some cases where robot 200 detects fluctuations of speed, such as robot 200 exceeding the maximum speed at a predetermined frequency (e.g., where robot 200 slows down and speeds up), robot 200 can issue a stop, such as a category 0 or category 1 or category 2 stop. Advantageously, such systems and diagnostics can allow robot 200 to stop if there are issues with speed, which could result in robot 200 going too fast (on the initiative of robot 200 and/or as a result of going down a hill). In some cases, such speed issues can result in a collision and/or causing more damage if robot 200 collides.

As another example, diagnostics can be used for reliable operation on the communication between sensor(s) and controller(s) and/or between controller(s). For example, such diagnostics can monitor data health and/or tolerable delays. Advantageously, checking on such data health and/or tolerable delays can assure that robotic systems are synchronized and robot 200 is operating as expected. Diagnostics implemented at the controller level to check the health of the high-level, including processes as sequencing, time-stamping, checksum, etc. Such diagnostics can also implement maximum tolerable delay from sensor data acquisition to arrival (e.g., from controller from high-level) of updated motor command. For example, sensor time can sync with host (e.g., high-level) time at startup. The high-level and controller(s) time can also be synced. Data packages from sensors can include timestamps and/or frame_id and/or checksum for each frame. The diagnostics to monitor data from a sensor can include one or more of: delta timestamp (e.g., frame_t - frame_t-1 < predetermined delta time threshold), identifying frame_id increases, reviewing checksum, referencing expected data, referencing data changes, and/or computing whether the standard deviation on reference data is within an expected range.

In some cases, robot 200 can generate motor commands at the high-level, including data (e.g., angle, speed, etc.), timestamp, checksum, and/or ID/sequencing information. Obtaining the timestamp can include acquiring time-stamped data from sensors, such as by logging the timestamp of the latest data from sensors (e.g., LiDAR, side-cameras, and/or any other cameras from sensors unit 212). Such time stamps can be used to send motor commands. Accordingly, diagnostics can measure the difference between the controller time (e.g., the current time) and the time to carry out a motor command. If this difference is smaller than a predefined time differential threshold, robot 200 can perform the motor command. Otherwise, robot 200 can perform a category 0, category 1, or category 2 stop. Advantageously, such diagnostics can assure that robotic systems are synchronized and robot 200 is operating as expected.

The diagnostics from the controller receiving motor commands can include assessing data package health, such as by determining whether time stamps are in order (e.g., that time stamps are increasing), delta timestamps are within predetermined threshold, and/or checksums. If one of these conditions is not true, robot 200 can be configured to perform a category 0, category 1, or category 2 stop.

As another example, a control system can include the functionality of sensors. These sensors can be high-level sensors and/or low-level sensors, including sensors of sensors unit 212. For example, sensors can have an associated fault tolerance. By way of illustration, a sensor can have an associated detection failure rate. Failure modes of a sensor can include one or more of: not sending data and/or data received by host with delay, software/firmware on sensor gets corrupted (e.g., malfunctioning sensor), data gets corrupted over transmission from sensor to host controller, sensor gets misaligned on robot 200 (e.g., as a result of an impact), and/or the sensor does not generate/report valid data (e.g., does not report valid data in the visual field of the sensor). Advantageously, such diagnostics can assure that sensors are reliably providing the data on which robot 200 is depending for operation.

In this example, certain diagnostics can be performed. For example, a sensor can be mounted on robot 200 in a way that it is seeing the ground around robot 200, and in a small part of its visual field the chassis of robot 200. The region of visual field corresponding to the chassis of robot 200 can be referred to as the target area. The distance and intensity values read in the target area can be referred to as target data. The target area and target data can be stored on the host computer during calibration (e.g., as part of the end-of-manufacturing calibration process). At calibration (e.g., as part of the manufacturing/calibration process), the sensor settings, and verification of such settings, can be applied.

At startup (and/or at least once per autonomous operation), the time the sensor can be registered to the host controller. For example, a timestamp can be transmitted in the sensor data package, where the timestamp for the sensor data can be generated on the sensor and sent to the host controller (e.g., data timestamp is not generated by the driver on the host controller). Error codes can be generated as part of the self-diagnostics inside the sensor. These error codes can be transmitted to the host controller. The region of the visual field around the robot that is desired to be protected can be referred to as a protected area.

Moreover, at least once before autonomous operation, correct operation of a machine can be verified. For example, an operator can walk around robot 200 to verify that a sensor is reading/seeing that operator. This walk-around can be performed such that the operator is within the field of view of the sensor. In some cases, the operator can walk in a predefined pattern (e.g., circling the robot). Advantageously, the predefined pattern can allow a plurality of sensors to read the operator, verifying their functionality. Advantageously, the predefined pattern can provide a known baseline for robot 200 to calibrate against.

Periodically during autonomous operation, the applications/settings of sensors can be checked. Configurations/settings of the sensor can be verified, such as by verifying current settings against desired sensor settings. If the sensor data value changes as expected when an emitter of the sensor is on, the sensor can turn off and/or lower exposure time (e.g., relative to normal settings). In some cases, the emitter of the sensor can be turned off and on to verify that the data values collected by the sensors change as expected.

In each frame and/or each cycle in the control loop, timestamps and/or checksums can be checked. For example, diagnostics can check that one or more of: sensor timestamps are increasing, the difference between current and previous sensor timestamps is below a predetermined threshold, elapsed time since the last received sensor data is below threshold (e.g., sensor data arrives with desired frequency), and/or sensor data integrity/checksum.

In each frame, sensor data can be checked for corruptions. For example, diagnostics can look for one or more of error codes in the sensor data package from the sensor, values read in the target area match target data, and/or target data has a small but non-zero variance.

In each frame, additional heuristics can be checked. For example, diagnostics can check one or more of: data integrity over time, data integrity over space, assert acceptable change in the data from frame to frame, assert that the sensor is providing ranging data in the protective area (e.g., a non-reflective object may be visible in the sensor), and/or assert that the sensor is not misaligned (e.g., by using ground (e.g., calibration) and target area).

As used herein, computer and/or computing device can include, but are not limited to, personal computers ("PCs") and minicomputers, whether desktop, laptop, or otherwise, mainframe computers, workstations, servers, personal digital assistants ("PDAs"), handheld computers, embedded computers, programmable logic devices, personal communicators, tablet computers, mobile devices, portable navigation aids, J2ME equipped devices, cellular telephones, smart phones, personal integrated communication or entertainment devices, and/or any other device capable of executing a set of instructions and processing an incoming data signal.

As used herein, computer program and/or software can include any sequence or human or machine cognizable steps which perform a function. Such computer program and/or software can be rendered in any programming language or environment including, for example, C/C++, C#, Fortran, COBOL, MATLAB^{™}, PASCAL, GO, RUST, SCALA, Python, assembly language, markup languages (e.g., HTML, SGML, XML, VoXML), and the like, as well as object-oriented environments such as the Common Object Request Broker Architecture ("CORBA"), JAVA^{™} (including J2ME, Java Beans, etc.), Binary Runtime Environment (e.g., "BREW"), and the like.

As used herein, connection, link, and/or wireless link can include a causal link between any two or more entities (whether physical or logical/virtual), which enables information exchange between the entities.

It will be recognized that while certain aspects of the disclosure are described in terms of a specific sequence of steps of a method, these descriptions are only illustrative of the broader methods of the disclosure, and can be modified as required by the particular application. Certain steps can be rendered unnecessary or optional under certain circumstances. Additionally, certain steps or functionality can be added to the disclosed implementations, or the order of performance of two or more steps permuted. All such variations are considered to be encompassed within the disclosure disclosed and claimed herein.

While the above detailed description has shown, described, and pointed out novel features of the disclosure as applied to various implementations, it will be understood that various omissions, substitutions, and changes in the form and details of the device or process illustrated can be made by those skilled in the art without departing from the disclosure. The foregoing description is of the best mode presently contemplated of carrying out the disclosure. This description is in no way meant to be limiting, but rather should be taken as illustrative of the general principles of the disclosure. The scope of the disclosure should be determined with reference to the claims.

While the disclosure has been illustrated and described in detail in the drawings and foregoing description, such illustration and description are to be considered illustrative or exemplary and not restrictive. The disclosure is not limited to the disclosed embodiments. Variations to the disclosed embodiments and/or implementations can be understood and effected by those skilled in the art in practicing the claimed disclosure, from a study of the drawings, the disclosure and the appended claims.

It should be noted that the use of particular terminology when describing certain features or aspects of the disclosure should not be taken to imply that the terminology is being re-defined herein to be restricted to include any specific characteristics of the features or aspects of the disclosure with which that terminology is associated. Terms and phrases used in this application, and variations thereof, especially in the appended claims, unless otherwise expressly stated, should be construed as open ended as opposed to limiting. As examples of the foregoing, the term "including" should be read to mean "including, without limitation," "including but not limited to," or the like; the term "comprising" as used herein is synonymous with "including," "containing," or "characterized by," and is inclusive or open-ended and does not exclude additional, unrecited elements or method steps; the term "having" should be interpreted as "having at least;" the term "such as" should be interpreted as "such as, without limitation;" the term 'includes" should be interpreted as "includes but is not limited to;" the term "example" is used to provide exemplary instances of the item in discussion, not an exhaustive or limiting list thereof, and should be interpreted as "example, but without limitation;" adjectives such as "known," "normal," "standard," and terms of similar meaning should not be construed as limiting the item described to a given time period or to an item available as of a given time, but instead should be read to encompass known, normal, or standard technologies that can be available or known now or at any time in the future; and use of terms like "preferably," "preferred," "desired," or "desirable," and words of similar meaning should not be understood as implying that certain features are critical, essential, or even important to the structure or function of the present disclosure, but instead as merely intended to highlight alternative or additional features that may or may not be utilized in a particular embodiment. Likewise, a group of items linked with the conjunction "and" should not be read as requiring that each and every one of those items be present in the grouping, but rather should be read as "and/or" unless expressly stated otherwise. Similarly, a group of items linked with the conjunction "or" should not be read as requiring mutual exclusivity among that group, but rather should be read as "and/or" unless expressly stated otherwise. The terms "about" or "approximate" and the like are synonymous and are used to indicate that the value modified by the term has an understood range associated with it, where the range can be ±20%, ±15%, ±10%, ±5%, or ±1%. The term "substantially" is used to indicate that a result (e.g., measurement value) is close to a targeted value, where close can mean, for example, the result is within 80% of the value, within 90% of the value, within 95% of the value, or within 99% of the value. Also, as used herein "defined" or "determined" can include "predefined" or "predetermined" and/or otherwise determined values, conditions, thresholds, measurements, and the like.

## Claims

1. A system for controlling movement of a device (200), comprising:
a memory (202) having computer readable instructions stored thereon; and
at least one processor (204) configured to execute the computer readable instructions to:
receive a first input from a sensor (212) upon detection of an obstacle in a first area (122A) around the device (200);
receive a different second input from the sensor (212) upon detection of an obstacle in a different second area (122B) around the device (200);
transmit a first signal to at least one actuator (220) upon receiving the first input from the sensor (212), the first signal to cause the device to perform a first category of stop, wherein the first category of stop includes:
stopping navigation of the device and stopping additional functionalities of the device, wherein the additional functionalities include one or more of a brush, a vacuum, and a liquid pump; or
moving in a different direction from a previous direction of movement of the device; and
transmit a different second signal to the at least one actuator (220) upon receiving the second input from the sensor (212), the second signal to cause the device to perform another category of stop that is different from the first category of stop, wherein the another category of stop includes stopping navigation of the device and waiting for the obstacle to move,
wherein the first area (122A) is an area, relative to a direction of movement of the device (200), in which the device would come into physical contact with an object present in the area as the device (200) moves in the direction of movement,
and wherein the second area (122B) is an area, relative to the direction of movement of the device (200), adjacent the first area (122A), in which the device (200) could come into physical contact with an object that is present in the area (122B) if the device (200) does not have enough time to maneuver before the object is in the first area (122A) around the device (200) as a result of movement of the device (200) in the direction of movement.

2. The system of Claim 1, wherein the first category of stop corresponds to removal of power from the at least one actuator.

3. The system of Claim 1, wherein the another category of stop corresponds to power available to the at least one actuator

4. The system of Claim 1, wherein the at least one processor is further configured to execute the computer readable instructions to:
determine velocity of the device along a path based on either current or voltage drawn by at least one motor associated with the at least one actuator; and
transmit either the first signal or the second signal to the at least one actuator if the velocity of the device is greater than a desired threshold.

5. A non-transitory computer readable medium having computer readable instructions stored thereon, that when executed by at least one processor (204) cause the at least one processor (204) to:
receive a first input from a sensor (212) upon detection of an obstacle in a first area (122A) around a device (200);
receive a different second input from the sensor (212) upon detection of an obstacle in a different second area (122B) around the device (200);
transmit a first signal to at least one actuator (220) upon receiving the first input from the sensor (212), the first signal to cause the device to perform a first category of stop, wherein the first category of stop includes:
stopping navigation of the device and stopping additional functionalities of the device, wherein the additional functionalities include one or more of a brush, a vacuum, and a liquid pump; or
moving in a different direction from a previous direction of movement of the device; and
transmit a different second signal to the at least one actuator (220) upon receiving the second input from the sensor (212), the second signal to cause the device to perform another category of stop that is different from the first category of stop, wherein the another category of stop includes stopping navigation of the device and waiting for the obstacle to move,
wherein the first area (122A) is an area, relative to a direction of movement of the device (200), in which the device (200) would come into physical contact with an object present in the area (122A) as the device (200) moves in the direction of movement,
and wherein the second area (122B) is an area, relative to the direction of movement of the device (200), adjacent the first area (122A), in which the device (200) could come into physical contact with an object that is present in the area (122B) if the device (200) does not have enough time to maneuver before the object is in the first area (122A) around the device (200) as a result of movement of the device (200) in the direction of movement.

6. The non-transitory computer readable medium of Claim 5, wherein the first category of stop corresponds to removal of power from the at least one actuator.

7. The non-transitory computer readable medium of Claim 5, wherein the another category of stop corresponds to power available to the at least one actuator.

8. The non-transitory computer readable medium of Claim 5, wherein the at least one processor is further configured to execute the computer readable instructions to:
determine velocity of the device along a path based on either current or voltage drawn by at least one motor associated with the at least one actuator; and
transmit either the first signal or the second signal to the at least one actuator if the velocity of the device is greater than a desired threshold.

9. A method of controlling movement of a device (200), comprising:
receiving a first input from a sensor (212) upon detection of an obstacle in a first area (122A) around the device (200);
receiving a different second input from the sensor (212) upon detection of an obstacle in a different second area (122B) around the device (200);
transmitting a first signal to at least one actuator (220) upon receiving the first input from the sensor, the first signal
to cause the device to perform a first category of stop , wherein the first category of stop includes:
stopping navigation of the device and stopping additional functionalities of the device, wherein the additional functionalities include one or more of a brush, a vacuum, and a liquid pump; or
moving in a different direction from a previous direction of movement of the device; and
transmitting a different second signal to the at least one actuator (220) upon receiving the second input from the sensor (212), the second signal to cause the device to perform another category of stop that is different from the first category of stop, wherein the another category of stop includes stopping navigation of the device and waiting for the obstacle to move,
wherein first area (122A) is an area, relative to a direction of movement of the device (200), in which the device (200) would come into physical contact with an object present in the area as the device (200) moves in the direction of movement,
and wherein the second area (122B) is an area, relative to the direction of movement of the device (200), adjacent the first area (122A), in which the device (200) could come into physical contact with an object that is present in the area (122B) if the device does not have enough time to maneuver before the object is in the first area (122A) around the device (200) as a result of movement of the device (200) in the direction of movement.

10. The method of Claim 9, wherein the first category of stop corresponds to removal of power from the at least one actuator.

11. The method of Claim 9, wherein the another category of stop corresponds to power available to the at least one actuator.

## Patentansprüche

1. System zum Steuern der Bewegung einer Vorrichtung (200), Folgendes umfassend:
einen Speicher (202), auf dem computerlesbare Anweisungen gespeichert sind, und
mindestens einen Prozessor (204), der dafür konfiguriert ist, die computerlesbaren Befehle für Folgendes auszuführen:
Empfangen einer ersten Eingabe von einem Sensor (212) auf das Erkennen eines Hindernisses in einem ersten Bereich (122A) rings um die Vorrichtung (200) hin,
Empfangen einer anderen, zweiten Eingabe von dem Sensor (212) auf das Erkennen eines Hindernisses in einem anderen, zweiten Bereich (122B) rings um die Vorrichtung (200) hin,
Übertragen eines ersten Signals an mindestens ein Betätigungselement (220) auf das Empfangen der ersten Eingabe von dem Sensor (212) hin, wobei das erste Signal die Vorrichtung veranlasst, eine erste Kategorie des Anhaltens auszuführen, wobei die erste Kategorie des Anhaltens Folgendes beinhaltet:
Anhalten der Navigation der Vorrichtung und Anhalten zusätzlicher Funktionalitäten der Vorrichtung, wobei die zusätzlichen Funktionalitäten eines oder mehreres von einer Bürste, einem Unterdruck und einer Flüssigkeitspumpe beinhalten, oder
Bewegen in einer zu einer vorherigen Richtung anderen Richtung der Bewegung der Vorrichtung und
Übertragen eines anderen, zweiten Signals an das mindestens eine Betätigungselement (220) auf das Empfangen der zweiten Eingabe von dem Sensor (212) hin, wobei das zweite Signal die Vorrichtung veranlasst, eine andere Kategorie des Anhaltens auszuführen, die sich von der ersten Kategorie des Anhaltens unterscheidet, wobei die andere Kategorie des Anhaltens das Anhalten der Navigation der Vorrichtung und das Warten auf die Bewegung des Hindernisses beinhaltet,
wobei der erste Bereich (122A) ein Bereich relativ zu einer Richtung der Bewegung der Vorrichtung (200) ist, in dem die Vorrichtung in physischen Kontakt mit einem Objekt käme, das in dem Bereich vorhanden ist, wenn sich die Vorrichtung (200) in der Bewegungsrichtung bewegt,
und wobei der zweite Bereich (122B) ein Bereich relativ zu der Richtung der Bewegung der Vorrichtung (200) ist, der an den ersten Bereich (122A) grenzt, in dem die Vorrichtung in physischen Kontakt mit einem Objekt kommen könnte, das in dem Bereich (122B) vorhanden ist, wenn die Vorrichtung (200) nicht genug Zeit hat zu manövrieren, bevor sich das Objekt, im Ergebnis der Bewegung der Vorrichtung (200) in der Richtung der Bewegung, in dem ersten Bereich (122A) rings um die Vorrichtung (200) befindet.

2. System nach Anspruch 1, wobei die erste Kategorie des Anhaltens dem Entzug von Leistung von dem mindestens einen Betätigungselement entspricht.

3. System nach Anspruch 1, wobei die andere Kategorie des Anhaltens dem Zur-Verfügung-Stellen von Leistung für das mindestens eine Betätigungselement entspricht.

4. System nach Anspruch 1, wobei der mindestens eine Prozessor ferner dafür konfiguriert ist, die computerlesbaren Anweisungen für Folgendes auszuführen:
Bestimmen der Geschwindigkeit der Vorrichtung entlang eines Weges, entweder basierend auf Stromstärke oder Spannung, die von mindestens einem Motor gezogen wird, der zu dem mindestens einen Betätigungselement gehört, und
Übertragen entweder des ersten Signals oder des zweiten Signals an das mindestens eine Betätigungselement, wenn die Geschwindigkeit der Vorrichtung größer als ein gewünschter Grenzwert ist.

5. Nicht-flüchtiges computerlesbares Speichermedium, auf dem computerlesbare Anweisungen gespeichert sind, die bei Ausführung durch mindestens einen Prozessor (204) den mindestens einen Prozessor (204) zu Folgendem veranlassen:
Empfangen einer ersten Eingabe von einem Sensor (212) auf das Erkennen eines Hindernisses in einem ersten Bereich (122A) rings um die Vorrichtung (200) hin,
Empfangen einer anderen, zweiten Eingabe von dem Sensor (212) auf das Erkennen eines Hindernisses in einem anderen, zweiten Bereich (122B) rings um die Vorrichtung (200) hin,
Übertragen eines ersten Signals an mindestens ein Betätigungselement (220) auf das Empfangen der ersten Eingabe von dem Sensor (212) hin, wobei das erste Signal die Vorrichtung veranlasst, eine erste Kategorie des Anhaltens auszuführen, wobei die erste Kategorie des Anhaltens Folgendes beinhaltet:
Anhalten der Navigation der Vorrichtung und Anhalten zusätzlicher Funktionalitäten der Vorrichtung, wobei die zusätzlichen Funktionalitäten eines oder mehreres von einer Bürste, einem Unterdruck und einer Flüssigkeitspumpe beinhalten, oder
Bewegen in einer zu einer vorherigen Richtung anderen Richtung der Bewegung der Vorrichtung und
Übertragen eines anderen, zweiten Signals an das mindestens eine Betätigungselement (220) auf das Empfangen der zweiten Eingabe von dem Sensor (212) hin, wobei das zweite Signal die Vorrichtung veranlasst, eine andere Kategorie des Anhaltens auszuführen, die sich von der ersten Kategorie des Anhaltens unterscheidet, wobei die andere Kategorie des Anhaltens das Anhalten der Navigation der Vorrichtung und das Warten auf die Bewegung des Hindernisses beinhaltet,
wobei der erste Bereich (122A) ein Bereich relativ zu einer Richtung der Bewegung der Vorrichtung (200) ist, in dem die Vorrichtung (200) in physischen Kontakt mit einem Objekt käme, das in dem Bereich (122A) vorhanden ist, wenn sich die Vorrichtung (200) in der Bewegungsrichtung bewegt,
und wobei der zweite Bereich (122B) ein Bereich relativ zu einer Richtung der Bewegung der Vorrichtung (200) ist, der an den ersten Bereich (122A) grenzt, in dem die Vorrichtung (200) in physischen Kontakt mit einem Objekt kommen könnte, das in dem Bereich (122B) vorhanden ist, wenn die Vorrichtung (200) nicht genug Zeit hat zu manövrieren, bevor sich das Objekt, im Ergebnis der Bewegung der Vorrichtung (200) in der Richtung der Bewegung, in dem ersten Bereich (122A) rings um die Vorrichtung (200) befindet.

6. Nicht-flüchtiges computerlesbares Speichermedium nach Anspruch 5, wobei die erste Kategorie des Anhaltens dem Entzug von Leistung von dem mindestens einen Betätigungselement entspricht.

7. Nicht-flüchtiges computerlesbares Speichermedium nach Anspruch 5, wobei die andere Kategorie des Anhaltens dem Zur-Verfügung-Stellen von Leistung für das mindestens eine Betätigungselement entspricht.

8. Nicht-flüchtiges computerlesbares Speichermedium nach Anspruch 5, wobei der mindestens eine Prozessor ferner dafür konfiguriert ist, die computerlesbaren Anweisungen für Folgendes auszuführen:
Bestimmen der Geschwindigkeit der Vorrichtung entlang eines Weges, entweder basierend auf Stromstärke oder Spannung, die von mindestens einem Motor gezogen wird, der zu dem mindestens einen Betätigungselement gehört, und
Übertragen entweder des ersten Signals oder des zweiten Signals an das mindestens eine Betätigungselement, wenn die Geschwindigkeit der Vorrichtung größer als ein gewünschter Grenzwert ist.

9. Verfahren zum Steuern der Bewegung einer Vorrichtung (200), Folgendes umfassend:
Empfangen einer ersten Eingabe von einem Sensor (212) auf das Erkennen eines Hindernisses in einem ersten Bereich (122A) rings um die Vorrichtung (200) hin,
Empfangen einer anderen, zweiten Eingabe von dem Sensor (212) auf das Erkennen eines Hindernisses in einem anderen, zweiten Bereich (122B) rings um die Vorrichtung (200) hin,
Übertragen eines ersten Signals an mindestens ein Betätigungselement (220) auf das Empfangen der ersten Eingabe von dem Sensor hin, wobei das erste Signal die Vorrichtung veranlasst, eine erste Kategorie des Anhaltens auszuführen, wobei die erste Kategorie des Anhaltens folgendes beinhaltet:
Anhalten der Navigation der Vorrichtung und Anhalten zusätzlicher Funktionalitäten der Vorrichtung, wobei die zusätzlichen Funktionalitäten eines oder mehreres von einer Bürste, einem Unterdruck und einer Flüssigkeitspumpe beinhalten, oder
Bewegen in einer zu einer vorherigen Richtung anderen Richtung der Bewegung der Vorrichtung und
Übertragen eines anderen, zweiten Signals an das mindestens eine Betätigungselement (220) auf das Empfangen der zweiten Eingabe von dem Sensor (212) hin, wobei das zweite Signal die Vorrichtung veranlasst, eine andere Kategorie des Anhaltens auszuführen, die sich von der ersten Kategorie des Anhaltens unterscheidet, wobei die andere Kategorie des Anhaltens das Anhalten der Navigation der Vorrichtung und das Warten auf die Bewegung des Hindernisses beinhaltet,
wobei der erste Bereich (122A) ein Bereich relativ zu einer Richtung der Bewegung der Vorrichtung (200) ist, in dem die Vorrichtung (200) in physischen Kontakt mit einem Objekt käme, das in dem Bereich vorhanden ist, wenn sich die Vorrichtung (200) in der Bewegungsrichtung bewegt,
und wobei der zweite Bereich (122B) ein Bereich relativ zu einer Richtung der Bewegung der Vorrichtung (200) ist, der an den ersten Bereich (122A) grenzt, in dem die Vorrichtung (200) in physischen Kontakt mit einem Objekt kommen könnte, das in dem Bereich (122B) vorhanden ist, wenn die Vorrichtung (200) nicht genug Zeit hat zu manövrieren, bevor sich das Objekt, im Ergebnis der Bewegung der Vorrichtung (200) in der Richtung der Bewegung, in dem ersten Bereich (122A) rings um die Vorrichtung (200) befindet.

10. Verfahren nach Anspruch 9, wobei die erste Kategorie des Anhaltens dem Entzug von Leistung von dem mindestens einen Betätigungselement entspricht.

11. Verfahren nach Anspruch 9, wobei die andere Kategorie des Anhaltens dem Zur-Verfügung-Stellen von Leistung für das mindestens eine Betätigungselement entspricht.

## Revendications

1. Système destiné à commander le déplacement d'un dispositif (200), comprenant :
une mémoire (202) sur laquelle sont stockées des instructions lisibles par ordinateur ; et
au moins un processeur (204) configuré de manière à exécuter les instructions lisibles par ordinateur pour :
recevoir une première entrée en provenance d'un capteur (212), suite à la détection d'un obstacle dans une première zone (122A) autour du dispositif (200) ;
recevoir une seconde entrée différente, en provenance du capteur (212), suite à la détection d'un obstacle dans une seconde zone différente (122B) autour du dispositif (200) ;
transmettre un premier signal à au moins un actionneur (220), suite à la réception de la première entrée en provenance du capteur (212), le premier signal étant destiné à amener le dispositif à mettre en oeuvre une première catégorie d'arrêt, dans lequel la première catégorie d'arrêt inclut :
l'arrêt de la navigation du dispositif et l'arrêt de fonctionnalités supplémentaires du dispositif, dans lequel les fonctionnalités supplémentaires incluent un ou plusieurs éléments parmi une brosse, un vide et une pompe à liquide ; ou
un déplacement dans une direction différente d'une direction précédente de déplacement du dispositif ; et
transmettre un second signal différent, audit au moins un actionneur (220), suite à la réception de la seconde entrée en provenance du capteur (212), le second signal étant destiné à amener le dispositif à mettre en oeuvre une autre catégorie d'arrêt qui est différente de la première catégorie d'arrêt, dans lequel ladite autre catégorie d'arrêt inclut l'arrêt de la navigation du dispositif et l'attente d'un déplacement de l'obstacle ;
dans lequel la première zone (122A) est une zone, par rapport à une direction de déplacement du dispositif (200), dans laquelle le dispositif entrerait en contact physique avec un objet présent dans la zone lorsque le dispositif (200) se déplace dans la direction de déplacement ; et
dans lequel la seconde zone (122B) est une zone, par rapport à la direction de déplacement du dispositif (200), adjacente à la première zone (122A), dans laquelle le dispositif (200) pourrait entrer en contact physique avec un objet qui est présent dans la zone (122B) si le dispositif (200) n'a pas suffisamment de temps pour manoeuvrer avant que l'objet ne soit dans la première zone (122A) autour du dispositif (200) suite au déplacement du dispositif (200) dans la direction de déplacement.

2. Système selon la revendication 1, dans lequel la première catégorie d'arrêt correspond à une suppression de puissance dudit au moins un actionneur.

3. Système selon la revendication 1, dans lequel ladite autre catégorie d'arrêt correspond à une puissance disponible pour ledit au moins un actionneur.

4. Système selon la revendication 1, dans lequel ledit au moins un processeur est en outre configuré de manière à exécuter les instructions lisibles par ordinateur pour :
déterminer une vitesse du dispositif le long d'un trajet sur la base soit d'un courant, soit d'une tension tiré(e) par au moins un moteur associé audit au moins un actionneur ; et
transmettre soit le premier signal, soit le second signal, audit au moins un actionneur si la vitesse du dispositif est supérieure à un seuil souhaité.

5. Support non transitoire lisible par ordinateur sur lequel sont stockées des instructions lisibles par ordinateur qui, lorsqu'elles sont exécutées par au moins un processeur (204), amènent ledit au moins un processeur (204) à :
recevoir une première entrée en provenance d'un capteur (212), suite à la détection d'un obstacle dans une première zone (122A) autour d'un dispositif (200) ;
recevoir une seconde entrée différente, en provenance du capteur (212), suite à la détection d'un obstacle dans une seconde zone différente (122B) autour du dispositif (200) ;
transmettre un premier signal à au moins un actionneur (220), suite à la réception de la première entrée en provenance du capteur (212), le premier signal étant destiné à amener le dispositif à mettre en oeuvre une première catégorie d'arrêt, dans lequel la première catégorie d'arrêt inclut :
l'arrêt de la navigation du dispositif et l'arrêt de fonctionnalités supplémentaires du dispositif, dans lequel les fonctionnalités supplémentaires incluent un ou plusieurs éléments parmi une brosse, un vide et une pompe à liquide ; ou
un déplacement dans une direction différente d'une direction précédente de déplacement du dispositif ; et
transmettre un second signal différent, audit au moins un actionneur (220), suite à la réception de la seconde entrée en provenance du capteur (212), le second signal étant destiné à amener le dispositif à mettre en oeuvre une autre catégorie d'arrêt qui est différente de la première catégorie d'arrêt, dans lequel ladite autre catégorie d'arrêt inclut l'arrêt de la navigation du dispositif et l'attente d'un déplacement de l'obstacle ;
dans lequel la première zone (122A) est une zone, par rapport à une direction de déplacement du dispositif (200), dans laquelle le dispositif (200) entrerait en contact physique avec un objet présent dans la zone (122A) lorsque le dispositif (200) se déplace dans la direction de déplacement ; et
dans lequel la seconde zone (122B) est une zone, par rapport à la direction de déplacement du dispositif (200), adjacente à la première zone (122A), dans laquelle le dispositif (200) pourrait entrer en contact physique avec un objet qui est présent dans la zone (122B) si le dispositif (200) n'a pas suffisamment de temps pour manoeuvrer avant que l'objet ne soit dans la première zone (122A) autour du dispositif (200) suite au déplacement du dispositif (200) dans la direction de déplacement.

6. Support non transitoire lisible par ordinateur selon la revendication 5, dans lequel la première catégorie d'arrêt correspond à une suppression de puissance dudit au moins un actionneur.

7. Support non transitoire lisible par ordinateur selon la revendication 5, dans lequel ladite autre catégorie d'arrêt correspond à une puissance disponible pour ledit au moins un actionneur.

8. Support non transitoire lisible par ordinateur selon la revendication 5, dans lequel ledit au moins un processeur est en outre configuré de manière à exécuter les instructions lisibles par ordinateur pour :
déterminer une vitesse du dispositif le long d'un trajet sur la base soit d'un courant, soit d'une tension tiré(e) par au moins un moteur associé audit au moins un actionneur ; et
transmettre soit le premier signal, soit le second signal, audit au moins un actionneur si la vitesse du dispositif est supérieure à un seuil souhaité.

9. Procédé de commande de déplacement d'un dispositif (200), comprenant les étapes ci-dessous consistant à :
recevoir une première entrée en provenance d'un capteur (212), suite à la détection d'un obstacle dans une première zone (122A) autour du dispositif (200) ;
recevoir une seconde entrée différente, en provenance du capteur (212), suite à la détection d'un obstacle dans une seconde zone différente (122B) autour du dispositif (200) ;
transmettre un premier signal à au moins un actionneur (220), suite à la réception de la première entrée en provenance du capteur, le premier signal étant destiné à amener le dispositif à mettre en oeuvre une première catégorie d'arrêt, dans lequel la première catégorie d'arrêt inclut :
l'arrêt de la navigation du dispositif et l'arrêt de fonctionnalités supplémentaires du dispositif, dans lequel les fonctionnalités supplémentaires incluent un ou plusieurs éléments parmi une brosse, un vide et une pompe à liquide ; ou
un déplacement dans une direction différente d'une direction précédente de déplacement du dispositif ; et
transmettre un second signal différent, audit au moins un actionneur (220), suite à la réception de la seconde entrée en provenance du capteur (212), le second signal étant destiné à amener le dispositif à mettre en oeuvre une autre catégorie d'arrêt qui est différente de la première catégorie d'arrêt, dans lequel ladite autre catégorie d'arrêt inclut l'arrêt de la navigation du dispositif et l'attente d'un déplacement de l'obstacle ;
dans lequel la première zone (122A) est une zone, par rapport à une direction de déplacement du dispositif (200), dans laquelle le dispositif (200) entrerait en contact physique avec un objet présent dans la zone lorsque le dispositif (200) se déplace dans la direction de déplacement ; et
dans lequel la seconde zone (122B) est une zone, par rapport à la direction de déplacement du dispositif (200), adjacente à la première zone (122A), dans laquelle le dispositif (200) pourrait entrer en contact physique avec un objet qui est présent dans la zone (122B) si le dispositif n'a pas suffisamment de temps pour manoeuvrer avant que l'objet ne soit dans la première zone (122A) autour du dispositif (200) suite au déplacement du dispositif (200) dans la direction de déplacement.

10. Procédé selon la revendication 9, dans lequel la première catégorie d'arrêt correspond à une suppression de puissance dudit au moins un actionneur.

11. Procédé selon la revendication 9, dans lequel ladite autre catégorie d'arrêt correspond à une puissance disponible pour ledit au moins un actionneur.
